# EUROPEAN PATENT SPECIFICATION

(11) **EP 2 530 002 B1**
(45) Date of publication and mention of the grant of the patent: **14.01.2015**
(21) Application number: 11168465.0
(22) Date of filing: 01.06.2011
(51) Int. Cl.: B62J 27/00, B62K 21/00, B62K 21/08, B62K 5/025

(54) **Passenger conveyance device with automatic steering angle limitation and speed reduction**
Personenbeförderungsvorrichtung mit automatischer Lenkwinkelbegrenzung und Geschwindigkeitsverminderung
Dispositif de transport de passager doté d'une limitation automatique d'angle de direction et de réduction de la vitesse

(43) Date of publication of application: 05.12.2012
(73) Proprietor: SUNRISE MEDICAL LIMITED, Stourbridge, West Midlands DY8 4PS (GB)
(72) Inventor: Davies, David, Telford, Shropshire, TF2 9NQ (GB); Tasker, Peter J., Dittorn Priors, Shrodshire, WV 16 6SU (GB)
(74) Representative: Holzwarth-Rochford, Andreas

(56) References cited:
- EP-A1- 0 321 676
- EP-A2- 1 875 888
- DD-A1- 257 769
- DE-A1- 2 823 354
- GB-A- 2 042 436
- US-A1- 2007 063 502
- US-B1- 7 661 492

## Description

The present invention relates to a passenger conveyance device comprising at least one first wheel and at least one second wheel, wherein the first wheel acts as a drive wheel and the second wheel acts as a steerable wheel, a steering angle of the second wheel measured relative to a steering position of the second wheel corresponding to a forward or a rearward traveling direction of the passenger conveyance device is limited to a first steering angle based on a first value representative for a speed of the passenger conveyance device, especially of the first wheel; and a method of controlling a steering of passenger conveyance device comprising at least one first wheel acting as a drive wheel and at least one second wheel acting as a steerable wheel, especially a passenger conveyance device according to the invention, wherein the steering angle is measured as an angle of the second wheel relative to a steering position of the second wheel corresponding to a forward traveling direction of the passenger conveyance device and the steering angle is limited to a first steering angle based on a first value representative for a speed of the passenger conveyance device, especially of the first wheel.

Passenger conveyance devices are, for example known in form of Mobility Scooters, having a single motor and transaxle differential gear box coupled to two drive wheels, that operate at various speeds, up to 15kph. The speed is controlled by the user via an input device, often referred to as 'Wig-wag' or speed actuator.

As there are no restrictions to the steering angle, except end stops predefined by general constructional requirements of the passenger conveyance device, it is possible for the user to turn a steering device, for example a handle bar/steering wheel, to any angle up to the maximum physically allowed, whilst traveling at any speed that the vehicle is capable of. To both maximize indoor maneuverability and to enable users with low upper body strength the effort required to turn the steering assembly is designed to be low. Therefore it is quite possible for the user to turn the steering to the angular physical limit quickly, easily whilst the scooter is traveling at all speeds it is capable of.

Powered Mobility Scooters have often what is referred to as manual steering. The steering is in most cases achieved either directly via a tiller, through a fork arrangement, especially to the single front wheel, or via a tiller and through a system of ball joints and links. The tiller being a column that links the steering elements connected to the wheel(s) and the steering device. The steering device is often a type of handle bar or steering wheel that enables the user to turn the wheel(s). The angle to which the wheels can turn left or right central alignment to the main longitudinal axis is usually mechanically limited and the limit is fixed and often limited to the physical space the wheels have within the vehicle structure. For maximum indoor maneuverability then the maximum angle is desired. Often the steering is only limited to an angle at which the function of the wheels ceases as they are unable to maintain any grip with the surface they operate on as the vehicle travels forwards or backwards.

Whilst traveling at high or maximum speed and simultaneously turning sharply the steering assembly, it is possible to make a passenger conveyance device unstable, especially when having two rear drive wheels and one front steerable wheel. During an attempted transition from traveling straight forward to turning, centrifugal forces cause the Center of Gravity (CoG) to move towards the outside of the turn. This force can lead to the device, especially a scooter, loosing stability and at worst tipping over or at best making the occupant or user very uncomfortable.

An attempt to resolve this issue are devices that sense rotational movement of the steering assembly and if the steering is turned then the scooter speed is reduced as described for example in US 2007/0063502A1.

Anyhow these devices have the following drawbacks:
1. The passenger conveyance device, especially if traveling at a relatively high speed, cannot react quickly enough and slow down fast enough, therefore the loss of stability still occurs. Especially in emergency situations, when a sharp turn has to be made at a high speed to go around an obstacle, the slow down is not as fast as necessary to avoid a tipping over in case a user especially uses the maximum steering angle.
2. In order to travel in a straight or near straight line on sloped or uneven surfaces the users needs to make regular small input to the steering to correct the direction of travel. Small steering corrections are interpreted as turns and the speed is reduced un-necessarily.
Furthermore a generic passenger conveyance device is for example known from DD 257 769 Al disclosing the features of the preamble of claims 1 and 12, comprising a circuit arrangement for an electro-mechanical steering mechanism of a wheelchair. A target value setting device is controllable by a user, wherein by the setting device a steering voltage is supplied. An electronic steering device sets the steering angle of a steerable wheel by setting a steering current. Depending on a speed of the wheelchair a range of the steering current is decreased such that a maximum steering angle becomes progressively smaller with increasing drive speed.

A comparable passenger conveyance device is also known from GB 2 042 436 A disclosing an invalid wheelchair control. The control comprise a control system arranged such that with a fast driving speed the steering deflection of steering wheels is controlled so as to be small and with a slow driving speed, the deflection of steering wheels is controlled so as to be large.

Also DE 28 23 354 Al discloses a passenger conveyance device, whereby this document is directed to a power steering device for a wheelchair. A polarity of a voltage applied to a steering support motor, and thereby the direction of steering and the magnitude of a steering lock are set by a target value potentiometer. The target value potentiometer is mechanically connected to a direction selection lever with which a person sitting in the wheelchair can set the direction and magnitude of the steering lock of the steerable wheels. By lowering a sensitivity to input signals given with the selection lever at higher speeds also for higher speeds a steering angle range is reduced.

However the used systems have the drawback that it is not possible for a user of the passenger conveyance device to use a full steering angle range, especially in emergency situations. Such an emergency situation would be for example that a user has to go around an obstacle.

It is thus the object of the claimed invention to further develop the generic passenger conveyance device and the generic method to overcome the disadvantages known in the state the art, especially to allow a passenger a steering within a fixed maximum steering angle range at every time independent from the traveling speed of the device passenger conveyance, for example in emergency situations, and simultaneously avoid reliably instable situations of the device as well as negative influences on the driving comfort.

This object is achieved with regard to the passenger conveyance device in that in case the steering angle exceeds a predefined second steering angle the speed of the passenger conveyance device is limited to a second value.

The passenger conveyance device may be characterized by a plurality of, preferably two, first wheels, wherein especially two first wheels are driven by one common drive unit, preferably via at least one gearbox, or two first wheels are driven by independent drive units, and/or characterized by a single second wheel.

Furthermore it is proposed that at least one first and at least one second wheel are formed by one wheel, especially acting simultaneously as a steerable wheel and a drive wheel, wherein preferably the passenger conveyance device comprises at least one third wheel, and/or in that the first wheel is a rear wheel and/or the second wheel is a front wheel with regard to a forward traveling direction of the passenger conveyance device, wherein especially the passenger conveyance device comprises two rear wheels and one front wheel, or in that all first and second wheels are separate wheels.

In the above described embodiments this is specially preferred that the steering angle is changeable, especially by an occupant, via at least one steering device, like a handle bar, a joystick, a steering wheel, a steering bar and/or tracking ball, and/or the second wheel and/or the steering device is/are connected to at least one steering spindle.

The invention furthermore proposes at least one mechanic transmission unit, which via a first steering signal of the steering device is mechanically transferable to the second wheel, wherein the mechanic transmission unit especially comprises at least a gearbox, a cam, an axle, a shaft, a tiller, a fork arrangement, a ball joint, the steering spindle and/or a mechanical link.

A passenger conveyance device according to the invention may be characterized that the first steering signal is at least partly transferable to the second wheel in form of an electronic signal, especially an analog and/or a digital electronic signal, preferably via at least one switch, at least one potentiometer an/or at least one actuator, wherein the actuator is preferably mechanically connected to the mechanic transmission unit.

The invention also proposes that at least one, especially closed-loop, control device is connected to at least one steering angle limiting device, wherein the control device receives the first value and/or the first steering signal and generates a second steering signal that is transmitted to the steering angle limiting device.

In the before described embodiment in a first alternative it is preferred that the steering angle limiting device mechanically limits, especially based on the second steering signal, a movement, preferably a turning angle, of the mechanic transmission unit, the second wheel and/or the steering device to a range representative for the first steering angle.

In a second alternative it is preferred that the steering angle limiting device limits an electronic signal, especially the second steering signal, provided to the actuator to a range restricted to a value representative for the first steering angle, wherein preferably the steering angle limiting device is comprised by the control device.

It is also proposed that the control device receives the first steering signal, especially a first electronic signal representative for the first steering signal, wherein preferably further the control device is connected to and/or comprises a speed limiting device and the control device generates a second signal, especially transferred to the speed limiting device, limiting the speed of the passenger conveyance device to the second value.

In this embodiment it is preferred that the speed limiting device actuates a brake, reduces the power supply to the drive unit, limits the speed of the first wheel, alters position of and/or alters a signal provided and/or generated by a speed actuator, especially an accelerator lever, an accelerator pedal, a gas pedal, a hand throttle, and/or a throttle.

A passenger conveyance device according to invention may also be characterized by at least one sensing device, wherein the first value is generated by the sensing device and/or the first value is a rotational speed of the first wheel, of the second wheel, of the third wheel and/or of the drive unit, a power supply value, especially a voltage value, a current value and/or a power value, of the drive unit, a speed of the passenger conveyance device relative to a surface, especially calculated based on GPS signals, a position of the speed actuator and/or the signal provided by the speed actuator.

Further embodiments of the invention may be characterized in that the control device generates the second steering signal and/or the second signal based on at least one lookup table and/or equation, wherein the relation between the first value and the first steering angle and/or the second steering angle and the second value is/are stored in the lookup table and/or is expressed in the equation, especially as a function of stability turning characteristics, a direction of travel or movement, an attitude and/or a longitudinal and/or transversal inclination of the passenger conveyance device, and/or an occupant capability, like an ability of movement, a grade of paralysis, a muscular strength and/or age.

It is also proposed that the second steering angle is greater than zero and/or smaller than the first steering angle, and/or the absolute value of the first steering angle is limited irrespective of a direction of the first steering angle, or the first steering angle is limited to different absolute values depending on the direction of the first steering angle.

Other embodiments may be characterized in that the passenger conveyance device is in form of a scooter, a mobility scooter, and/or a wheelchair.

The invention further proposes that the steering angle limiting device comprises at least one first movable locking means and the mechanic transmission unit comprises at least one second locking means, preferably drivingly connected to the mechanic transmission unit, the second wheel and/or the steering device, wherein a first contact surface of the first locking means may be brought in contact with a second contact surface of the second locking means, especially at the first steering angle.

For this embodiment it is preferred that the first locking means comprises a plurality of first contact surfaces and/or the second locking means comprises a plurality of second contact surfaces, wherein preferably the different first contact surfaces and/or second contact surfaces represent respective different first steering angles.

Furthermore it is proposed that at least two first contact surfaces and/or at least two second contact surfaces are forming a step or are continuously merging into each other.

The invention also may be characterized in that the first locking means is movable, preferably into a longitudinal direction, whereby changing the first contact surface contactable by the second locking means or changing the second contact surface contactable by the first locking means in case the mechanic transmission unit is turned such that the second wheel is turned to the first steering angle.

A inventive passenger conveyance device may be further characterized by at least one actuating device for moving the first locking means, wherein preferably the actuating device generates a longitudinal movement directly transmitted to the first locking means or the actuating device generates a rotational movement being transferred into a preferably longitudinal, movement of the first locking means.

In the before described embodiments it is preferred in a first alternative that the movement of the first locking means is in a direction mainly perpendicular to a rotational axis of the second locking means preferably in an radial direction of the rotational axis.

In a second alternative it is preferred that the movement of the first locking means is in a direction mainly parallel to a rotational axis of the second locking means.

Finally the inventive passenger conveyance device may be characterized in that the first locking means and/or the second locking means a symmetrical with respect to at least one symmetry plane.

With regard to the method this object is achieved in that in case the steering angle exceeds a predefined second steering angle the speed of the passenger conveyance device is limited to a second value.

The method may be characterized that the steering angle is changed, especially by an occupant, via at least one steering device, wherein preferably a first steering signal of the steering device is mechanically transferred to the second wheel, preferably via at least one mechanic transmission unit.

Furthermore it is proposed that the first steering signal is at least partly transferred to the second wheel in form of an electronic signal, especially an analog and/or a digital electronic signal, preferably via at least one switch, at least one potentiometer an/or at least one actuator, wherein the actuator is preferably mechanically connected to the mechanic transmission unit.

The invention also provides the preferred embodiment in that the first value and/or the first steering angle is/are received by at least one, especially closed-loop, control device connected to at least one steering angle limiting device and the control device generates a second steering signal that is transmitted to the steering angle limiting device.

In the before mentioned embodiment it is preferred that a movement, especially a turning angle of the mechanic transmission unit and/or the steering device, is mechanically limited by the steering angle limiting device to a range representative for the first steering angle or an electronic signal, especially the second steering signal, provided to the actuator is limited, especially by the steering angle limiting device, to a range restricted to a value representative for the first steering angle.

It is also proposed that the first steering signal, especially a first electronic signal representative for the first steering signal, is/are received by the control device, wherein preferably the control device generates a second signal, especially transferred to a speed limiting device, connected to the control device, limiting the speed of the passenger conveyance device to the second value.

Finally the invention proposes for the method that the second steering signal and/or the second signal is generated, preferably by the control device, based on at least one lookup table, wherein the relation between the first value and the first steering angle, and/or the second steering angle and the second value is/are stored.

Beside the limiting of the steering angle additionally and optional an altering of the steering force depending on the speed might be realized. For this purpose the inventive passenger conveyance device and/or the method might include the following features.

The passenger conveyance device may be characterized in that based on the first value a force necessary for altering the steering angle in at least one predefined region is changed.

For this purpose the passenger conveyance device may be characterized in that at least one, especially closed-loop, second control device, especially the above described control device is connected to at least one steering force altering device, wherein the second control device receives the first value and generates especially further based on the first steering signal, a second steering signal that is transmitted to the steering force altering device.

In this embodiment it is especially preferred that the steering force altering device mechanically alters a force necessary for a movement of the mechanic transmission unit, the second wheel and/or the steering device.

It is preferred that the second control device generates the second steering signal based on at least one lookup table and/or equation, wherein the relation between the first value and the force necessary for altering the steering angle, especially a force applied to the steering device when altering the steering angle, is stored in the lookup table and/or expressed in the equation, especially as a function of stability turning characteristics, an attitude, a longitudinal and/or transversal inclination and/or a direction of travel or movement of the passenger conveyance device and/or a user capability, like an ability of movement, a grade of paralysis, a muscular strength and/or an age.

The passenger conveyance device may be further characterized in that the force necessary to alter the steering angle is mainly constant for a first value being smaller than a first set value and is increased for a first value being equal or greater than the first set value, wherein especially the force necessary to alter the steering angle is increased as a function of the first value, especially in progressive stages, linearly, exponentially, quadratically and/or logarithmically, wherein preferably the first set value is zero.

In an advantageous embodiment the force necessary to alter the steering angle is altered, especially increased, depending on the steering angle, preferably an absolute value of the steering angle, especially in progressive stages, linearly, exponentially, quadratically and/or logarithmically.

It is proposed that the steering force altering device comprises at least one first movable contact means and the mechanic transmission unit, the second wheel and/or the steering device comprises at least one second contact means, preferably drivingly connected to the mechanic transmission unit, the second wheel and/or the steering device, wherein a first contact surface of the first contact means may be brought in contact with a second contact surface of the second contact means, to increase a friction between the first contact means and the second contact means.

In this embodiment it is further preferred that the steering force altering device comprises at least one first spring device, wherein preferably the first contact means and/or the second contact means is/are spring biased fixed to a structure of the passenger conveyance device via the first spring device, wherein preferably the other of the first contact means and the second contact means is connected to the mechanic transmission unit, and/or in that the force is altered based on a profile of the first contact means and/or the second contact means, especially by a profile of the first contact means and/or the second contact means spanned in a plane by the normal directions of the first contact surface and/or the second contact surface in different areas, especially that respective first contact surfaces and/or second surfaces are positioned in different heights relative to the respective other contact means.

The two embodiments before described may be characterized by at least one second actuating device for moving the first contact means relative to the second contact means and/or for moving the second contact means relative to the first contact means, wherein preferably the actuating device provides the movement based on a pneumatic, electromagnetic and/or mechanic working principle.

Furthermore it is preferred that the force to alter the steering angle is altered by changing a relative position of the first contact means and the second contact means, preferably the first contact surface and the second contact surface, especially via the second actuating device, wherein preferably for a first value being lower than the first set value the first contact means and the second means are, especially spring biased, separated from each other and are in contact with each other, especially based on an electromagnetic force, for a first value being equal or grater than the first set value.

In the lately described embodiment with the invention it is proposed also that the relative position is altered by moving the first contact means relative to the second contact means in a direction mainly perpendicular to a normal direction of the first contact surface and/or by moving the second contact means relative to the first contact means in a direction mainly perpendicular to a normal direction of the second contact surface.

It is also proposed that preferably the second actuating device and/or the first spring device, the force to alter the steering angle is changed by changing a pressure force by which the first contact means contacts the second contact means, preferably by moving the first contact means in a direction being mainly parallel to a normal direction of the first contact surface and/or by moving the second contact means in a direction being mainly parallel to a normal direction of the second contact surface.

The passenger conveyance device according to this embodiment might further be characterized in that the movement is transmitted via at least one biasing means, preferably a second spring device, to the first contact means and/or the second contact means.

It is also preferred that the first contact surface is aligned perpendicular and the second contact surface is aligned parallel to a first axis, especially a first rotational axis of the mechanic transmission unit and/or the steering device, wherein preferably the first contact means is moved parallel to the first axis by the actuating device and/or the second contact means is moved radially to the first axis by the actuating device, the first contact surface is aligned parallel and the second contact surface is aligned perpendicular to the first axis, wherein preferably the first contact means is moved radially to the first axis by the second actuating device and/or the second contact means is moved parallel to the first axis by the second actuating device, the first contact surface and the second contact surface are aligned parallel to the first axis, wherein preferably the first contact means and/or the second contact means is/are moved radially to the first axis by the second actuating device, or the first contact surface and the second contact surface are aligned perpendicular to the first axis, wherein preferably the first contact means and/or the second contact means is/are moved parallel to the first axis by the second actuating device.

Also in these embodiments it is preferred that at least two first contact surfaces and/or at least two second contact surfaces of the contact means are forming a step or are continuously merging into each other and/or that the first contact means and/or the second contact means is/are symmetrical with respect to at least one symmetry plane.

The method might be adapted to allow an altering of the steering force in that based on the first value, a force necessary for altering the steering angle is changed.

For this method it is proposed that, preferably by the at least one, especially closed-loop, second control device, especially connected to at least one steering force altering device, based on the first value, preferably in combination with a first steering signal, especially generated by a steering device, a second steering signal is generated, that is especially transmitted to a steering force altering device.

The method may further be characterized in that the second steering signal is generated based on at least one lookup table and/or equation, wherein the relation between the first value and the force necessary for altering the steering angle is stored in the lookup table and/or is expressed in the equation, especially as a function of stability turning characteristics an attitude, a longitudinal and/or transversal inclination and/or a direction of travel or movement of the passenger conveyance device and/or a user capability, like an ability of movement, a grade of paralysis, a muscular strength and/or an age.

It is also proposed that the force necessary to alter the steering angle is mainly constant for a first value being smaller than a first set value and is increased for a first value being equal or greater than the first set value, wherein especially the force necessary to alter the steering angle is increased as a function of the first value, especially in progressive stages, linearly, exponentially, quadratically and/or logarithmically, wherein preferably the first set value is zero.

Finally the method might be characterized in that the force necessary to alter the steering angle is altered, especially increased, depending on the steering angle, preferably an absolute value of the steering angle, especially in progressive stages, linearly, exponentially, quadratically and/or logarithmically.

Thus the claimed invention is based on the astonishing perception that by not only restricting the maximum steering angle depending on a speed of the passenger conveyance device or by only reducing the speed of the passenger conveyance device depending on a steering angle, but by restricting a steering angle to a first steering angle depending on the speed of the passenger conveyance device and by simultaneously reducing the speed of the passenger conveyance device in case a second steering angle, being especially smaller than the first steering angle, is exceeded, a person may still use a maximum possible steering angle in emergency situations. This is based on the technical finding that simultaneously with increasing steering angle above the second steering angle also the speed is reduced automatically and thus the first steering angle is increased and a greater steering angle is allowed. Beside this increasing of the maximum steering angle due to the slowing down of the passenger conveyance device furthermore the drawbacks of only reducing the speed of the device depending on the steering angle and of only restricting the steering angle depending on the speed are avoided. Especially the maximum possible steering angle at the respective speed ensures that the device may not become instable especially may not tip over and with decreasing speed also this maximum steering angle is increased.

This technical teaching might be combined but does not have to be combined with the following technical teaching according to the following preferred additional provisions.

Additionally to changing a speed of the passenger conveyance device depending on an steering angle or restricting a possible steering angle depending on the speed of the passenger conveyance device a changing of a force necessary to alter this steering angle might be realized. By this instabilities of the passenger conveyance device are better avoided as depending on the speed a user will not exceed a predefined (stable) steering angle in normal situations as he will feel an increase in the force necessary to change, especially increase, the steering angle. However the user/occupant will be allowed, especially in emergency situations, to use the maximum possible steering angle, for example to go around an object. In other words a user is prevented from turning the steering easily and quickly at high speeds preventing an instability of the passenger conveyance device, especially a scooter, but however may use the maximum steering angle, with a higher force necessary, for example in emergency situations, wherein these higher forces may be provided by the user due to the ability to make a higher strength available in emergency situations.

In both cases, that means by the claimed technical teaching, independent whether it is combined with the preferred additional provisions, in comparison to generic passenger conveyance devices the stability is increased without reducing the ability to allow the best maneuverability in emergency situations or without decreasing the comfort of the passenger conveyance device.

Further the maximum allowable steering angle and/or the maximum necessary force to alter a steering angle may also be depending on a stability turning characteristic of the device, an attitude of the device, a longitudinal and/or transversal inclination of the device, a direction of travel or movement of the device and/or a user capability, like an ability of movement, a grade of paralysis, a muscular of strength and/or an age. Especially a sensor maybe used to measure these factors, especially an attitude and/or the inclination of the passenger conveyance device.

The limiting of the steering angle might be realized in different ways, especially depending on a steering mechanism realized in the device. Generally the passenger conveyance device comprises a control device that monitors a first value, especially the passenger conveyance device's speed or an adequate value provided by a first sensing device, especially a scooter's speed, and controls the allowable steering angle correspondingly.

The control device is programmed (tuned) to suit the driving characteristics of the passenger conveyance device so that it only allows the user to input via a steering device a limited first steering angle for a given speed or sets the steering angle of the second (steerable) wheel to be not greater than the first steering angle, hence not allowing the passenger conveyance device to become instable due to an attempted turn at a speed that is too excessive to enable it to be accomplished.

By the method of the invention further the steering angle at lower speeds is not limited, hence the maneuverability characteristics of the passenger conveyance device are not reduced, especially , when small steering corrections are made the passenger conveyance device is not slowed down.

Further the control device detects that the passenger conveyance device is traveling at high speed and also detects that a steering angle might demanded greater than the stability allows as the steering angle exceeds a predefined second steering angle and therefore slows the passenger conveyance device down that inturn to allows a greater (first) steering angle to be used.

In a first embodiment a mechanical steering connection is used in the passenger conveyance device. That means that a first steering signal given by user via as steering device is fully mechanically transmitted to a steerable (second) wheel of the passenger conveyance device. This connection is especially established via a mechanical transmission unit. In this embodiment the passenger conveyance device comprises a sensing device for either sensing the passenger conveyance device speed or to estimate the scooter speed, for example based on power supplied to an electromotor of the passenger conveyance device.

The speed data provided by the sensing device in form of a first value and the data provided by the steering device in form of a first steering signal is processed by the control device and transferred into a second steering signal that is than transmitted to a steering angle limiting device. This transfer preferably is carried out by a comparison against a pre-determined set of data to control the steering angle limiting. The pre-determined set of data being, especially inter alias, determined from the passenger conveyance device stability turning characteristics. Alternatively the characteristics can be programmed and adjusted to suit both the passenger conveyance device characteristics, environment where the passenger conveyance device is being used and the user's capabilities.

The steering angle limiting device limits the permissible steering angle to a range representative of the first steering angle. The steering angle limiter could be one of the following but not limited to:
An adjustable steering stop that interacts with the mechanic transmission unit, especially a steering spindle. The steering stop comprises a first locking means interacting with a second locking means connected to the mechanic transmission unit. Different areas of the first locking means and/or the steering stop come into contact with the second locking means, for example a protrusion from the steering spindle, at different passenger conveyance device speeds as commanded and/or moved by the steering angle limiting device. The shape, size, form and amount of movement of the first locking means and/or steering stop are determined to suit the passenger conveyance device characteristics, environment where the passenger conveyance device is being used and the user's capabilities. The movement of the steering stop may be achieved in different ways. Especially the first locking means is moved by an electromechanic, magnetomechanic hydraulic, and/or pneumatic actuating device. For example this actuating device might use the Eddy-current effect.

For example a body, possibly a plate or disc being comprised by the first locking means, might be used. The body, forming the first locking means, comes into contact with a second locking means, e.g. in form of a protrusion from the steering spindle, at different speeds as commanded by the steering angle limiting device.

In an further development or alternative different areas in form of second contact surfaces of the second locking means, being especially a tapered or stepped locking means, come into contact with a body being part of the first locking means, especially a first contact surface of the first locking means, whose relative position to the second locking means is commanded by the steering angle limiting device at different speeds.

In an additional or alternative embodiment the shaped body of the first locking means has different areas in form of different first contact surfaces, comprised especially by a stepped or tapered body. These different areas of the body whose relative position commanded by the steering angle limiting device at different scooter speeds come into contact with the second locking means, especially a second contact surface of the second contact means. The shape, size, form and amount of movement of the first locking means and/or the second means locking are determined to suit the passenger conveyance device characteristics, environment where the passenger conveyance device is being used and the user's capabilities.

It might also be possible to realize the steering angle limiting device in a fully mechanical way. For example the passenger conveyance device might comprise a device that translates mechanical rotation movement due to the passenger conveyance device's speed, especially a scooter speed into a steering angle limitation. The device uses the variation in torque or speed or force generated by centrifugal force generated by the scooters speed to mechanically vary the steering angle limiting. In other words the actuating device might be an (fully) mechanic actuating device.

A speed translator forming a part of this mechanic actuating device could use a rotational mass generated forces to generate rotational or linear movement.

A stepped plate comprised or formed by the first locking means might be used to interact with the second locking means, especially connected to the steering spindle. Different areas of the stepped plate might come, for example, into contact with a protrusion from the steering spindle at different speeds as determined by the speed translator. The shape, size, form and amount of movement of the steeped plate are determined to suit the passenger conveyance device characteristics, environment where the passenger conveyance device is being used and the user's capabilities. The movement of the stepped plate may be achieved in different ways, possibly using linear movement from the translator and by rotational movement from the translator.

Also with the mechanic actuating device the first locking means and the second locking means might have the characteristics regarding their outer form described before.

Independent of the way of function of the actuating device rotational or longitudinal movements of the actuating device might be transferred into longitudinal or rotational movements of the first locking means.

In other embodiments the first steering signal provided by the user via the steering device is at least partly transmitted to a steerable wheel in form of an electronic signal. Especially the steering device provides a first steering signal that is transmitted to the control device in a mechanic, hydraulic, pneumatic and/or electronic form and depending on the first steering signal as well as the first value the control device produces a second (electronic) steering signal that is transmitted to an actuator that then moves the steerable wheel, especially directly or via the mechanic transmission unit. In these embodiments a mechanic steering limiting device may be avoided and the restriction of the steering angle might be realized in a fully electronic way. Especially also when limiting the steering angle in electronic way the passenger conveyance device comprises a sensing device for either sensing the passenger conveyance device speed or to estimate the scooter speed based on power supplied to the motor and that produces an electronic signal.

The actuator that is controlled by the control device turns the steerable wheel of the passenger conveyance device. The actuator could be one of the following but not limited to.

The actuator might comprise or might be formed by a linear actuator connected to a protrusion from the mechanic transmission unit, especially a steering spindle that imparts linear motion that is translated into rotary motion of the steering spindle. The amount of rotational angular movement of the spindle being created is determined by the amount of linear movement of the actuator and is controlled by the steering angle limiting device.

Alternative or additionally a rotary actuator might be used, acting on the mechanic transmission unit, preferably a steering spindle that imparts rotary motion that is translated in to rotary motion of the steering spindle via a gear train, belt drive or friction drive. The amount of rotational angular movement of the spindle being created is determined by the amount of rotational movement of the actuator and is controlled by the steering angle limiting device.

In the before described embodiments the speed data in form of the first value and the user occupant input via the steering device, especially a steering wheel, handle, bar or similar device, is processed by the control device in comparison against a pre-determined set of data to control the steering angle limiting device. The pre-determined set of data being determined from the passenger conveyance device stability turning characteristics. Alternatively the characteristics can be programmed and adjusted to suit both the passenger conveyance device characteristics, environment where the passenger conveyance device is being used and the user's capabilities. The control device compares the current speed and demanded turning angle and provides a suitable steerable wheel angle in form of a second steering signal taking into account the maximum permissible steering angle for the current passenger conveyance device speed and attitude.

Although in the aforementioned embodiments a control of the steering angle was described by limiting a movement of a spindle also other elements of a mechanic transmission unit maybe used for such a limiting, for example a gearbox, a cam, an axle, a shaft, a tiller, a fork arrangement, ball joint and/or any other mechanical link.

To also reduce the speed of the personal conveyance device depending on the steering angle, especially the second steering angle, different solutions might be used however all including that a first value is provided and transferred to the control device such that the control device may alter the speed of the personal conveyance device via a speed limiting device that for example actuates a break, reduces a power supplied to the drive unit, limits the speed of the drive wheel or other functions.

To additionally alter a force necessary to change a steering angle to not prevent a user from turning away from danger, for example in an obstacle in an emergency situation, different systems, especially steering angle force altering devices, might be used.

The device for altering the force may comprise a second actuating device and an actuated driven pat, for example comprising rubber, forming a first contact means that is at low speeds not in contact with a second contact means connected to the mechanic transmission unit. At high speeds the second actuating device moves the first contact means closer to the second contact means. When the steering is turned the second contact means rotates with the mechanical transmission unit.

The second contact means might alternatively or additionally to the use of a second actuating device be thicker at its ends, that means the first and second contact means might be closer to each other or might have a higher contact force in case the first contact means is positioned in the area of the ends of the second contacts means or contacts the second contact means in the area of the ends. A first contact surface of the first contact means will than rub on the second contact means more and more as the steering is turned to a greater angle. This results in resistant preventing the user from turning the steering easily and quickly at high speed, additionally preventing instability of the personal conveyance device.

The amount of resistants might be controlled by the shape of the first contact means and/or the second contact means, the first contact surface of the first contact means and/or the second contact surface of the second contact means, a pressure and/or movement provided by the second actuating device and/or the material of the first and/or second contact means. Also a spring device between the first contact means and the second actuating device, might be possible or the second actuating device might be formed by a spring, especially in case of a shaping of the first or second contact means as described above.

In the respective embodiments different orientations of the first and second contact means, especially the first and second contact surfaces relative to each other, might be realized.

Also it might be possible that the second actuating device does not provide a movement in a direction that is parallel to a normal direction of a contact surface but this movement might be provided by the above mentioned spring device. By the second actuating device it is then secured that at low speeds, especially below the first set value, the first and second contact means are not in contact with each other independing on the steering angle as the first or second contact means is moved away from the other contact means by the second actuating device, especially by a movement perpendicular to the normal direction of the contact surfaces of the contact means, especially such that the first contact surface and the second contact surface do not fall in line with each other. At high speeds, especially above the first set value the second actuating device moves the first or second contact means to fall in line with each other. When the steering is then turned the first or second contact means again retains with the steering.

As described above the movement of the steering results in a resistant preventing the user from turning the steering easily/quickly at high speed and thus preventing an instability of the personal conveyance device. At least the user gets a feedback that he is now entering a steering angle range that might lead to instabilities as the force is increasing.

Further advantages and features of the invention are presented in the following description in which preferred embodiments are shown by the help of the enclosed figures, in which
- Figure 1: is a schematic drawing showing different components of a passenger conveyance device according to a first embodiment of the invention;
- Figure 2: is a schematic drawing showing different components of a passenger conveyance device according to a second embodiment of the invention;
- Figures 3a to Figure 3c: are schematic drawings showing a steering angle limiting device according to a first embodiment in three different positions;
- Figure 4: is a schematic drawing showing a steering angle limiting device according to a second embodiment of the invention;
- Figures 5a to 4,5c: are schematic drawings showing a steering angle limiting device according to a third embodiment in three different positions;
- Figures 6a to 6c: are schematic drawings showing steering angle limiting device according to a fourth embodiment in three different positions;
- Figures 7a to 7c: are schematic drawings showing a steering angle limiting device according to a fifth embodiment in three different positions;
- Figures 8a to 8c: are schematic drawings showing a steering angle limiting device according to a sixth embodiment in three different positions;
- Figure 8d: is a schematic drawing showing a perspective view onto the steering angle limiting device according to figures 8a to figures 8c in a direction A in figure 8a;
- Figure 9: is a schematic view onto a passenger conveyance device with a steering force altering device according to a first embodiment;
- Figurers 10a to 10c: are schematic perspective views onto the steering force altering device of figure 9 according to a cutaway B in figure 9 seen from the direction C1 in figure 9;
- Figures 11 a to 11c: are schematic views onto the steering force altering device of figures 9 and 10a to 10c in a direction C2 in figure 9 in three different positions;
- Figures 11d to 11f: are schematic views comparable to the views shown in figures 10a to 10c but onto an alternative steering force altering device of figure 9;
- Figures 11g and 11h: are schematic views comparable to the views in figures 11a to 11c but onto the steering force altering device of figures 11e and 11f;
- Figure 12: is a schematic view onto a passenger conveyance device with a steering force altering device according to a second embodiment;
- Figures 13a to 13c: are schematic drawings showing a perspective view onto the steering force altering device of the passenger conveyance device of figure 12 in three different positions;
- Figure 14: is schematic view onto a passenger conveyance device with a steering force altering device according to a third embodiment in a first position;
- Figure 15 5: is a schematic view onto the steering force altering device of figure 14 in a cutaway view according cutaway E in figure 14 in a second position; and
- Figures 16a and 16b: are schematic perspective views onto the steering force altering device of figures 14 in a direction F in figure 14.

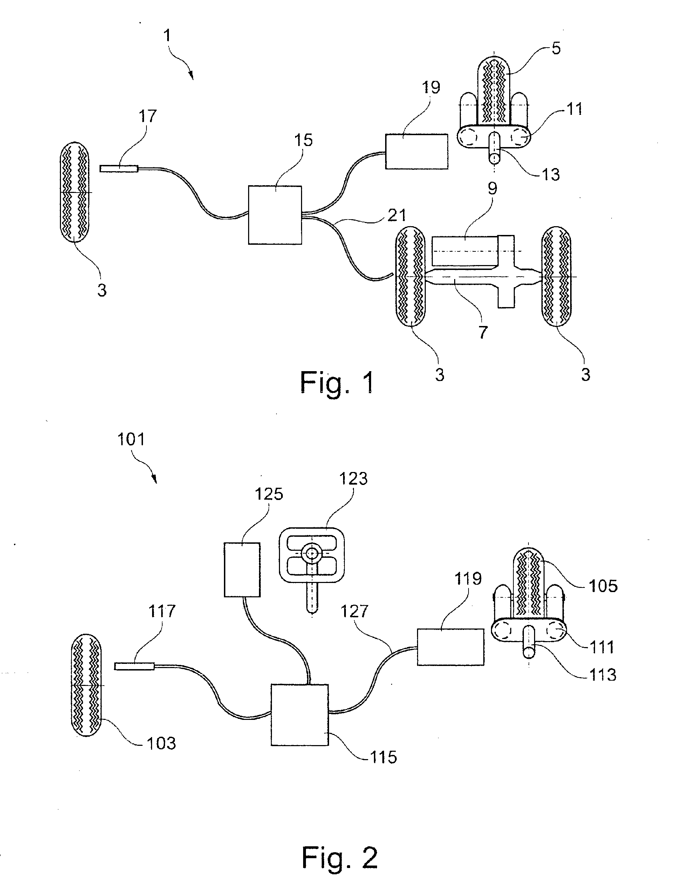

Figure 1 shows a schematic view onto different components of a passenger conveyance device in form of a scooter 1 according to a first embodiment of the invention. The scooter 1 comprises two first wheels 3 acting as drive wheels and a second wheel 5 acting as a steerable wheel. The first wheels 3 are connected via a gear box 7 to a drive unit in form of an electro-motor 9. The second wheel 5 is connected to a mechanic transmission unit from which a fork 11 and a spindle 13 are shown. In figure 1, to ease the understanding, one of the first wheels 3 is shown separately to allow to explain that a control device 15 is connected to a sensing device 17 to measure a speed of the scooter 1 to provide a first value to the control device 15. In an alternative embodiment the sensing device 17 maybe configured to measure a speed of the second wheel 5.

The first value provided to the control device 15 is used, as explained later, to restrict a steering angle of the second wheel 5 to a predefined first steering angle being defined based on the first value with the help of steering angle limiting device 19 and preferably also to alter a steering force. The control device is also used to control the drive unit 9 via a connection 21, especially to reduce a speed of the scooter 1 depending on a steering angle set by a occupant or user of the scooter 1 via a steering device, not shown in figure 1, in case the steering angle exceeds a predefined second steering angle. Thus in the scooter 1 the control device 15 also comprises the speed limiting device that alters a signal provided to the drive unit 9 to change, especially reduce, the speed of the scooter 1.

In the embodiment shown in figure 1 the steerable wheel 5 is mechanically connected to the steering device.

In figure 2 a second embodiment of the invention in form of a scooter 101 is shown. Elements of the scooter 101 complying with elements of the scooter 1 shown in figure 1 are having the same reference signs however increased by the factor 100. Also the scooter 101 is driven by a not shown drive unit to drive the wheels 103 and being connected to the control device 115. In figure 2 furthermore a steering device in form of a steering wheel 123 is shown. A position of the steering wheel 123 is sensed via a reading device 125 providing a first steering signal for the control device 115. The control device 115 is furthermore connected to a not shown actuator to actuate the mechanic transmission unit, especially the spindle 113 and/ore the fork 111. For this purpose the control device 115 generates a second steering signal that is provided to this actuator. The actuator is especially comprised by the steering angle limiting device 119 and the second steering angle is fed to the actuator via a connection 127.

Thus the scooter 1 comprises a mechanic steering mechanism as signals from the steering device are (fully) mechanically transferred from the steering device to the steerable wheel 5 via the mechanical transmission unit. The scooter 101 comprises however a steering system in which the first steering signal is at least partly transferred in electronic form to the steerable wheel 105.

In both cases via the control device 115,15, depending on a speed of the scooter 1, 101, a steering angle of the wheel 5, 105 is limited to a predefined first steering angle. In the scooter 1 this is realized by the steering angle limiting device 19 providing mechanical limiting of the movement of the wheel 5 and/or the mechanical transmission unit. In scooter 101 the steering angle limiting device adapts the first steering signal such that an actuator turns the wheel 105 only in a predefined range.

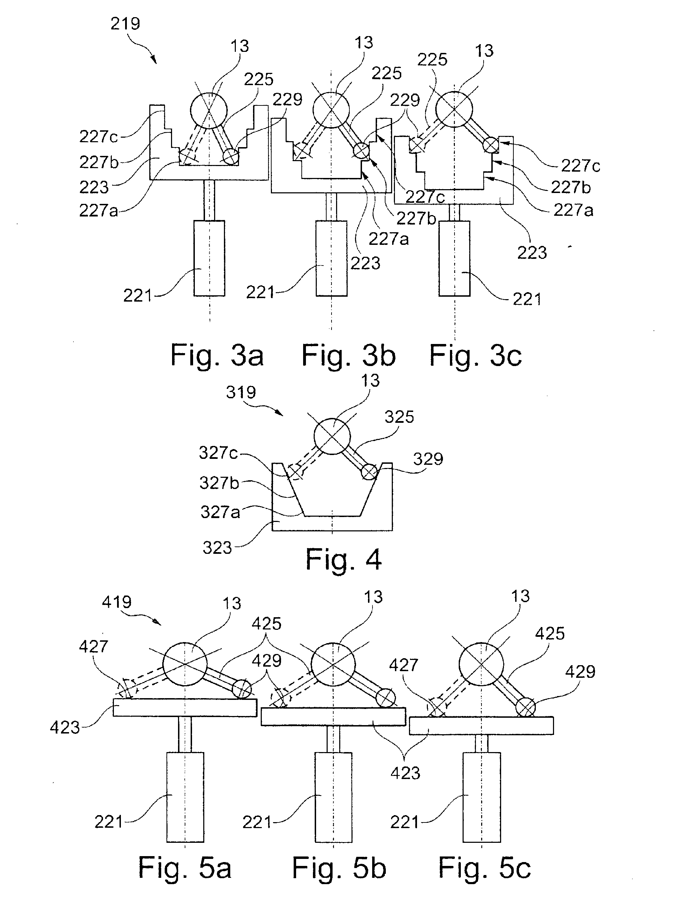

In the following with the help of figures 3a to 8d different embodiments of a steering angle limiting device that are useable as a steering angle limiting device 19,119 are shown.

In figures 3a to figure 3c different positions of a steering angle limiting device 219 are shown. As can be seen from figure 3a the steering angle limiting device comprises an actuating device 221 being connected to a first locking means 223. A spindle 13 is connected to a second locking means 225. The first locking means 223 comprises first contact surfaces 227a, 227b, 227c. The second locking means 225 comprises a second contact surface 229.

Depending on the second steering signal provided by the control device the actuating device 221 changes the position of the first locking means. Depending on the position of the first locking means 223 the second locking means 225, more precisely the second contact surface 229, comes into contact with the respective contact surfaces 227a (figure 3a), 227b (figure 3b) or 227c (figure 3c) in the respective steering positions of the spindle 13 and the locking means 225 shown in continues and broken lines respectively. The position of the contact surfaces 227a, 227b and 227c allows a more or less restricted range of movement for the second locking means 225 between these two shown positions and thus of the spindle 13. In figure 3c the range of movement is maximized whereas with a higher speed of the scooter the range of movement is reduced as shown in figure 3b and at higher speeds the movement of the spindle 13 and thus the steering range of the scooter is reduced to a minimum range as shown in figure 3a.

Although the contact surfaces of the steering angle limiting device 219 are arranged in a stepwise manner an alternative embodiment is shown in figure 4 is explained with the help of a steering limiting device 319. Elements of the device 319 being corresponding to elements of device 219 have the same reference signs but increased by 100. The different surfaces may be connected in a continuous manner in form of contact surfaces 327a, 327b and 327c.

In figures 5a to 5c a third embodiment of a steering angle limiting device 419 is shown in different positions. Elements of the device 419 being corresponding to elements of the device 219 have the same reference signs but increased by 200. In figure 5a a minimized steering range between the positions of the locking means 425 shown in broken and in continuous lines (movement counter clockwise from the position shown in continuous lines to position shown in broken lines) is possible due to the position of the first locking means 423 relative to the second locking means 425. In this embodiment the rotational movement of the spindle is transmitted via a gear reduction to the steerable wheel. This range of movement is increased in the second position shown in figure 5b and maximized in the position shown in figure 5c.

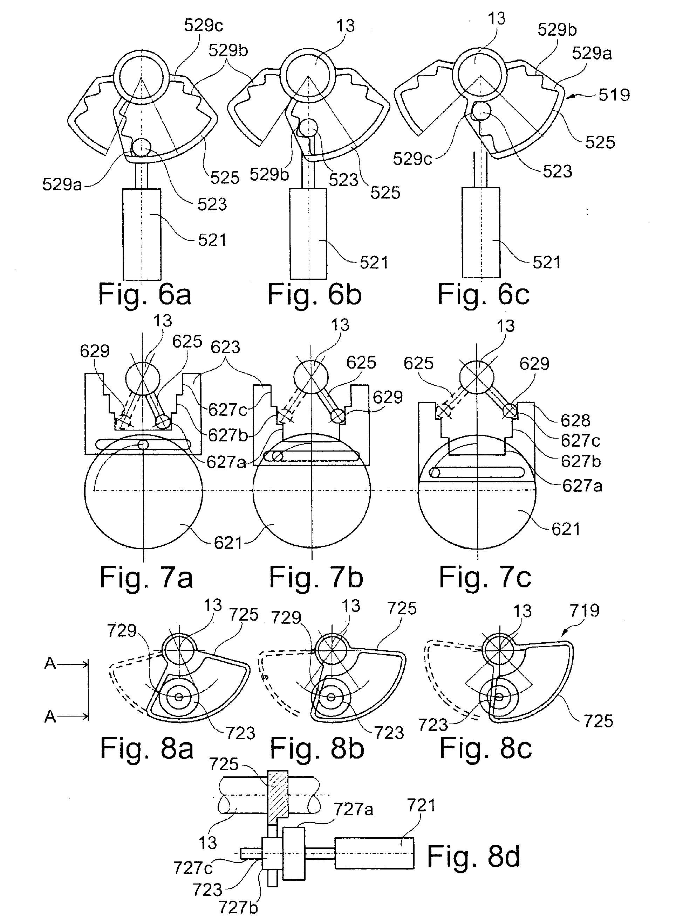

In figures 6a to 6c a fourth embodiment of a steering angle limiting device 519 is shown. Elements of the device 519 being corresponding to elements of device 219 have the same reference signs but increased by 300. The steering angle limiting device 519 differs from the steering angle limiting devices 219, 319 mainly with regard to a form of the first locking means 523 and the second locking means 525. In comparison to the embodiments shown in figures 3a to 5c in which the first locking means provides respective different contact surfaces in the embodiment shown in figures 6a to 6c the first locking means 523 provides mainly one contact surface 527, whereas the second locking means provides respective contact surfaces 529a, 529b and 529c. However, depending on the position of the first locking means 523, controlled by the actuating device 521, a range of movement between the positions shown in broken and continous lines of the second locking means and thus of a spindle 13 is changed. At high speeds of the scooter the steering angle limiting device 519 is in the position shown in figures 6a restricting the possible steering angle to a minimum value, whereas in figure 6c the scooter speed is so low that the maximum possible steering angle range is allowed.

In the embodiments shown in the figures 3a to 6c, the actuating devices 221, 421 and 521 provide a longitudinal movement that is transferred into a longitudinal movement of the first locking means. Alternatives to this are possible.

Such an alternative is shown in figures 7a to 7c in which a fifth embodiment of a steering angle limiting device 619 is shown. Again elements of device 619 being corresponding to elements of device 219 have the same reference signs, anyhow increased by 400. The actuating device 621 provides a rotational movement which is transferred into a longitudinal movement of a first locking means 623 being comparable to the first locking means 223 of the steering angle limiting device 219.

Also a movement of the first locking means is not restricted to a movement in a direction being radial to an axis of spindle 13. This movement can also be in a direction parallel to the spindle axis, for example in case the radial space around the spindle 13 is restricted. Such an embodiment in form of an steering angle limiting device 719 (elements of device 719 corresponding to elements of device 219 have the same reference signs, anyhow increased by 500) is shown in figures 8a to 8d. In figures 8a to 8c different positions of a first locking means 723 relative to a second locking means 725 are shown. In figure 8d a view onto the steering angle limiting device 719 in a direction A is shown. As can be taken from figure 8d the actuating device 721 moves the first locking means 723 in a direction parallel to an axis of the spindle 13. The first locking means has stepped conus shape providing respective contact surfaces 727c, 727b and 727a for the second locking means 725. Depending on the position of the first locking means 723 the movement of the spindle and thus the steerable wheel is more or less restricted.

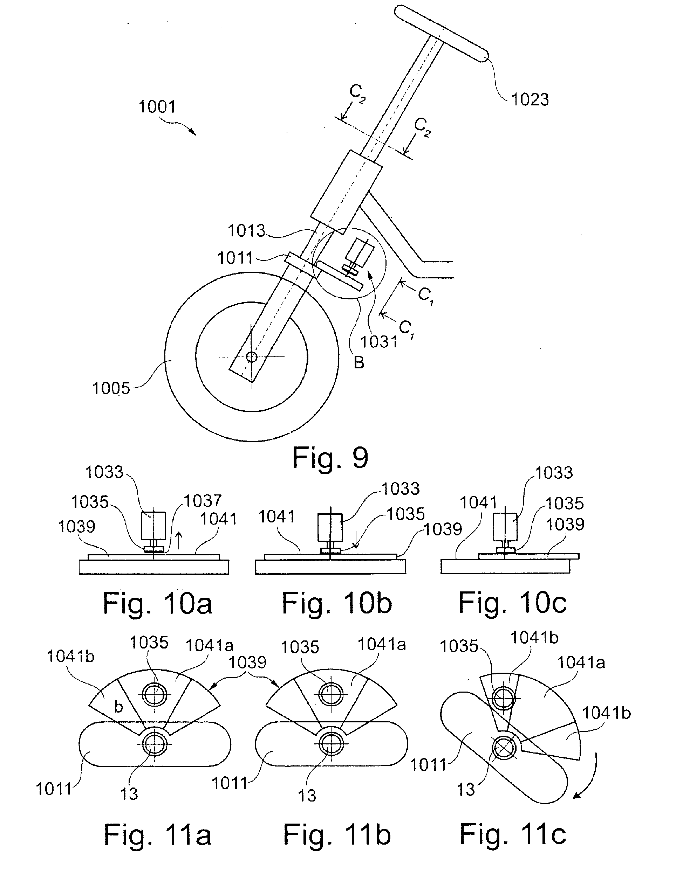

In figure 9 a perspective view onto a part of another embodiment of a passenger conveyance device according to an optional embodiment comprising a steering force altering device in form of a scooter 1001 is shown. The scooter 1001 comprises a not shown device wheel driven by an also not shown device unit, a steerable wheel 1005 connected via a mechanical transmission unit comprising a fork 1011 and a spindle 1013 to a steering device in form of a steering wheel 1023. The scooter 1001 comprises a steering force altering device 1031 which is connected to a not shown second control device, which might be identical to control device 15, 115 as described above. Depending on a first value, representing a speed of the scooter, the second control device changes with the help of the steering force altering device, a force necessary to change a steering angle of the wheel 1005.

In figures 10a to 10c the steering force altering device 1031 is shown in different positions, based on a a cutaway B in the direction C1 of figure 9. In figure 10a the steering force altering device 1031 is shown in a position in which the scooter is traveling at a low speed, especially a speed lower than a first set value. As can be taken from figure 10a the steering force altering device comprises a second actuating device 1033 being connected to a first contact means 1035 having a first contact surface 1037 at least partly comprising a rubber material.

Connected to the spindle 1013 is a second contact means 1039. In case the speed of the scooter 1001 is increased, especially a speed above the first set value, the first contact means 1035, more precisely the first contact surface 1037, is brought in to contact with the second contact means 1039, more precisely the a second contact surface 1041, of the second contact means 1039. Due to the contact of the first contact means 1035 and the second contact means 1039a frictional resistance is generated such that a higher force is necessary to move the second contact means 1039 relative to the first contact means 1035 and thus the steering device 1023 as well a the steerable wheel 1005.

Furthermore, the second contact means has such a second surface that for increasing steering angles the pressure force between the first and second contact means is additionally increased and thus the frictional force is increased.

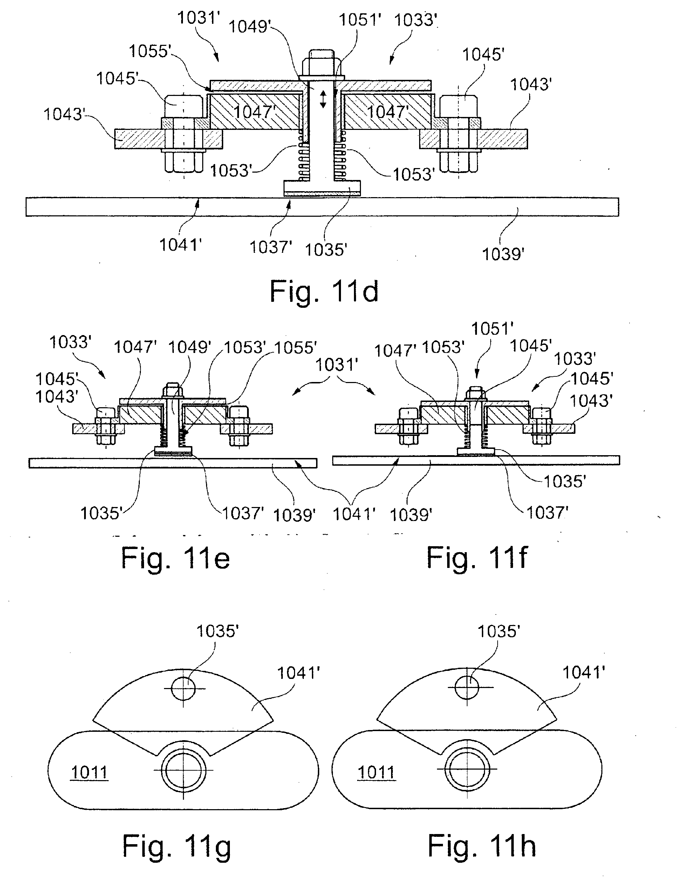

As can be taken from figures 11a to 11c the second contact means 1039 has a profile in a plane spaned by the normal directions of the different areas of the first contact surface or the second surface that the thickness is increased into the direction of the first contact means at its end. Especially the second contact means comprises at least two contact surfaces 1041a and 1041b.

By the steering force altering device, depending on the speed of the scooter, the force necessary to rotate or to move the steering device 1023 and the steerable wheel 1005 is increased from the position shown figures 10a and 11a to the position shown in figures 10b and 11b as the first contact means 1035 is brought in contact with the second contact means 1039. Furthermore, at such higher speeds the force necessary to move the steerable wheel 1005 is furthermore increased for higher absolute values of the steering angle, as can be taken from the position of the steering force altering device shown in figures 10c and 11c. At higher steering angles the first contact means 1035, namely the first contact surface 1037 of the same, does not contact anymore the second contact means in the area of the second contact surface 1041a but in the area of the (higher) second contact surface 1041b. Due to the higher pressures forces based on the profile of the second contact means the frictional forces are also higher.

In other embodiments the pressure forces between the first contact surface and the second contact surface might not be influenced by a profile of the contact surfaces but might be controlled and/or altered solely by the pressure force build up by the actuating device.

Such an alternative embodiment is for example shown in figures 11d to 11h.

In figure 11d a cross sectional view onto a different steering force altering device 1031' is shown. The elements of the steering force altering device 1031', which correspond to the elements of the steering force altering device 1031 have the same reference number, however with one apostrophe. The main difference to the steering force altering device 1031 is that further details of the actuating device 1033' are shown and that the profile of the second contact means 1039', especially the form of the second contact surface 1041', is flat.

In this steering force altering device 1031' the steering force is mainly altered by the pressure force by which the first contact means 1035', especially the first contact surface 1037', is pressed onto the second contact means 1039', especially the second contact surface 1041'. The actuating device 1033' is mechanically connected to a mount 1043' via screws 1045' including a little compliance. A coil 1047' is fixed to the mount 1043'. A core 1049' being connected to the first contact means 1035' is located within a coil opening 1051' of coil 1047'. Via a spring 1053' the core 1049' and thus the first contact means 1035' is forced away from the second contact means 1041'. Thus in the not energized situation of coil 1047', especially at low speeds of the scooter 1001, the spring 1053' keeps the contact surfaces 1037' and 1041' separated from each other. This position is shown in figure 11d. At higher speeds of the scooter 1001 the coil 1047' is energized and thus a gap 1055' is closed resulting in a movement of the core 1049' and thus the first contact means 1035' in the direction to the second contact means 1039'. This causes the two contact surfaces 1037' and 1041' to touch each other and hence increases the steering force. Especially in the situation when the contact surfaces 1037' and 1041' touch each other the connection of the actuating device 1033' to the mount 1043' via the screws 1045' allows by the little compliance small steering movements without increased force. In other words the actuating device 1033' is mounted in such away that allows to move a small amount and thus will allow a user to turn a steering by comparable small angles without feeling a resistance.

In figure 11e the steering force altering device 1031' is shown in a position in which the steering force is minimized. In figure 11f the situation is shown in which the core 1047' is energized and thus the first contact means 1035' is pressed onto the contact means 1039'. As can be seen from figures 11e to 11h, in comparison to the embodiment shown in figures 10a to 11c, the second contact means 1039', especially the second contact surface 1041' has a flat profile. That means in the steering force altering device 1031' a steering force as solely altered by the force generated by the actuating device 1033'. For greater steering angles a current flowing trough the coil 1047' is increased and thus a pressure force by which the core 1049' is forced into the direction of the second contact means 1039' is increased.

Of course the steering force altering device 1031' might be further adapted such that the second contact means 1039' has a profile comparable to the second contact means 1039 shown in figures 10a to 11c. Especially the actuating device 1033' might only be used to bring the first and second contact means into contact which each other, whereas the steering force is increased for greater steering angles based on the profile of the second contact means, especially the second contact surface.

Furthermore the actuating device 1033' might be amended such that beside coils additional levers are used to transmit a movement of the core 1049' to the first contact means 1035' to use respective mechanical advantages to reduce the movement of the first contact means but simultaneously increase the force that might be build up by the actuating device 1033'.

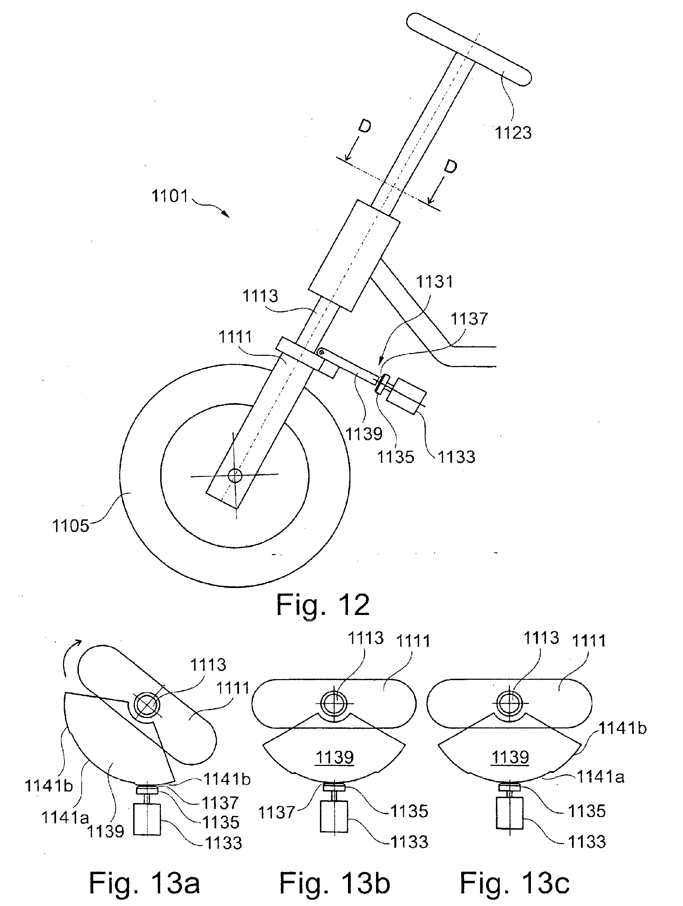

In the embodiment shown in figures 9 to 11h a movement of the first contact means via the second actuating device 1033, 1033' is generated along a direction being parallel to a rotational axis of the spindle and/or the second contact means. In figures 12 to 13c an alternative embodiment in form of a scooter 1101 is shown. Elements of the scooter 1101 being corresponding to scooter 1001 have the same reference signs, anyhow increased by 100. In comparison to the scooter 1001 in the steering force altering device 1131 of the scooter 1101 the second actuating device 1133 is located such that a movement of the first contact means 1135 is generated in a direction perpendicular to a rotational axis of the spindle 1113 and thus the second contact means 1139. Again by moving the first contact means 1135 via the second actuation device 1133, a pressure force and thus a frictional force between the first and second contact means 1135, 1139 is increased depending on a speed of the scooter 1101. Furthermore, by a profile of the second contact means 1139, especially respective second contact surfaces 1141a, 1141b of the second contact means 1139, with increasing steering angles the frictional force is also increased. Again the shape of the second contact means is such that in a plane defined spanned by the normal directions of the respective regions of the second contact means at the ends of the second contact means the contact surfaces are highered in a direction to the first contact means.

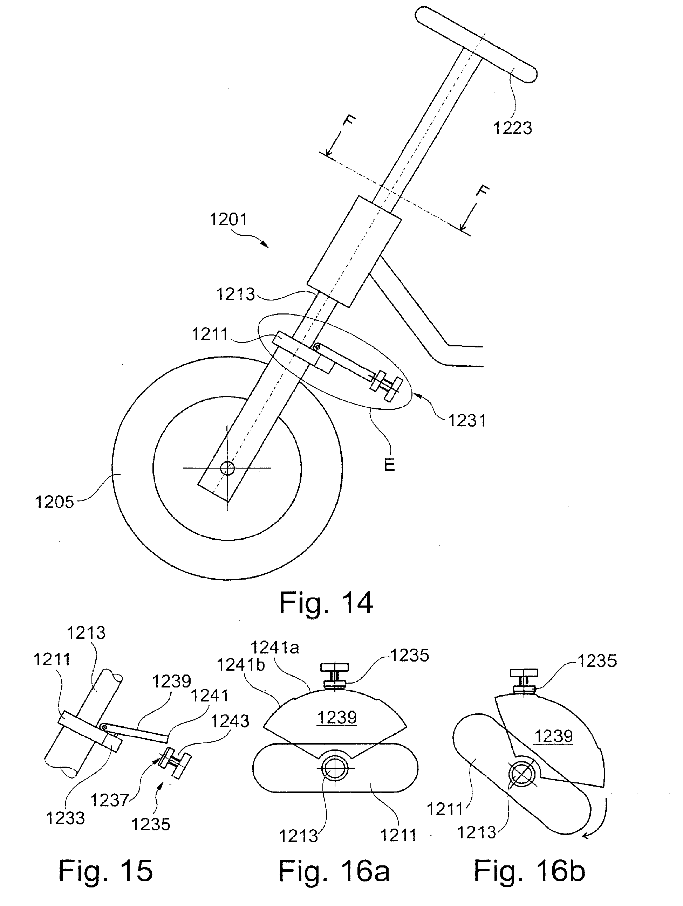

In figures 14 to 16b another scooter having a third embodiment of a steering force altering device 1231 is shown. Elements of the scooter 1201 corresponding to elements of scooter 1001 have the same reference signs, anyhow increased by 200. In comparison to the embodiment shown in figures 9 to 13c, the steering force altering device 1231 of scooter 1201 comprises a second actuating device 1233 that is actuating the second contact means 1239 whereas the first contact means 1235 is biased by a spring device 1243. In a position, shown in figure 14, the first and second contact means 1235, 1239 are aligned with each other and thus due to the profile form of the second contact means 1239 the force necessary to alter a steering angle, is increased to the ends of the contact means 1239 and thus to higher steering angles. In case the scooter 1201 is traveling at lower speeds, especially below the first set value, via the second actuating device 1233 not the first contact means 1235 but the second contact means 1239 is moved, however in a direction perpendicular to a normal direction of the contact surface 1237 of the first contact means 1235. By this movement, as shown in figure 15, the first and second contact means (1235, 1239) are not anymore in line with each other and thus the steering force necessary to move the steerable wheel 1205 is minimized.

In figures 16a and 16b the steering force altering device 1231 is shown in a position as shown in figure 14, when the scooter 1201 is traveling with a speed being higher than the predefined first set value. Depending on the steering angle a frictional force is increased for higher steering angles, when the relative position of the first and second contact means is changed such that for an increasing steering angle a force necessary to change the steering angle is increased due to the profile of the second contact means.

In a preferred embodiment the control device not only alters the steering force, but also reduces, as described with regard to scooter 1 and 101, the speed in case a steering angle is increased over a second value. In this way the speed of the scooter is reduced and due to the reduction of the speed, also the force necessary for altering the steering angle, is decreased easing a steering of the scooter and thus easing a turn around an obstacle in case of an emergency situation.

### Reference signs

- 1: scooter
- 3: wheel
- 5: wheel
- 7: gearbox
- 9: electromotor
- 11: fork
- 13: spindle
- 15: control device
- 17: sensing device
- 19: steering angle limiting device
- 21: connection
- 101: scooter
- 103: wheel
- 105: wheel
- 111: fork
- 113: spindle
- 115: control device
- 117: sensing device
- 119: steering angle limiting device
- 123: steering wheel
- 125: reading device
- 127: connection

- 219,319,419,519,619,719: steering angle limiting device
- 221, 421, 521, 621, 721: actuating device
- 223323, 423, 523, 623, 723: locking means
- 225, 325, 425, 525, 625, 725: locking means
- 227a, 227b 227c, 327a, 327b, 327c, 427,:
- 527, 627a, 627b, 627c, 727a,727b, 727c: contact surface
- 229, 329, 429, 529a, 529b, 529c, 629, 729: contact surface

- A, C 1, C2, D, F: direction
- B, E: cutaway
- 1001, 1101, 1201: scooter
- 1005, 1105, 1205: wheel
- 1011,1111,1211: fork

- 1013, 1113, 1213: spindle
- 1023, 1123, 1223: steering force altering device
- 1031, 1031', 1131, 1231: steering force altering device
- 1033, 1033', 1133, 1233: actuating device
- 1035, 1035', 1135, 1235: contact means
- 1037, 1037', 1137, 1237: contact surface
- 1039, 1039', 1139, 1239: contact means
- 1041, 1041', 1041a, 1041b, 1141a, 1141b,:
- 1241, 1241 a, 1241 b: contact surface
- 1043': mount
- 1045': screw
- 1047': coil
- 1049': core
- 1051': opening
- 1053': spring
- 1055': gap
- 1243: spring device

## Claims

1. Passenger conveyance device (1, 101) comprising at least one first wheel (3, 103) and at least one second wheel (5, 105), wherein the first wheel (3, 103) acts as a drive wheel and the second wheel (5, 105) acts as a steerable wheel, a steering angle of the second wheel (5, 105) measured relative to a steering position of the second wheel (5, 105) corresponding to a forward or rearward traveling direction of the passenger conveyance device is limited to a first steering angle based on a first value representative for a speed of the passenger conveyance device (1, 101), especially of the first wheel (3, 103),
**characterized in that**
in case the steering angle exceeds a predefined second steering angle the speed of the passenger conveyance device (1, 101) is limited to a second value.

2. Passenger conveyance device according to claim 1, **characterized by** a plurality of, preferably two, first wheels (3, 103), wherein especially two first wheels (3, 103) are driven by one common drive unit (9), preferably via at least one gearbox (7), or two first wheels (3, 103) are driven by independent drive units, and **characterized in that** at least one first and at least one second wheel are formed by one wheel, especially acting simultaneously as a steerable wheel and a drive wheel, wherein preferably the passenger conveyance device comprises at least one third wheel, and **in that** the first wheel (3, 103) is a rear wheel and/or the second wheel (5, 105) is a front wheel with regard to a forward traveling direction of the passenger conveyance device, wherein especially the passenger conveyance device (1, 101) comprises two rear wheels (3, 103) and one front wheel (5, 105).

3. Passenger conveyance device according to claims 1 to 2 **characterized in that** the steering angle is changeable, especially by an occupant, via at least one steering device (123), like a handle bar, a joystick, a steering wheel (123), a steering bar and/or tracking ball, and/or the second wheel (5, 105) and/or the steering device (123) is/are connected to at least one steering spindle (13, 113), wherein preferably at least one mechanic transmission unit (11, 13, 111, 113) is provided, which via a first steering signal of the steering device (123) is mechanically transferable to the second wheel (5, 105), wherein the mechanic transmission unit especially comprises at least a gearbox, a cam, an axle, a shaft, a tiller, a fork arrangement (11, 111), a ball joint, the steering spindle (13, 113) and/or a mechanical link.

4. Passenger conveyance device according to one of the preceding claims, **characterized in that**
the first steering signal is at least partly transferable to the second wheel (5, 105) in form of an electronic signal, especially an analog and/or a digital electronic signal, preferably via at least one switch, at least one potentiometer and/or at least one actuator, wherein the actuator is preferably mechanically connected to the mechanic transmission unit (11, 13, 111, 113), and **in that**
at least one, especially closed-loop, control device (15, 115) is connected to at least one steering angle limiting device (19, 119, 219, 319, 419, 519, 619, 719), wherein the control device (15, 115) receives the first value and/or the first steering signal and generates a second steering signal that is transmitted to the steering angle limiting device (19, 219, 319, 419, 519, 619, 719), wherein especially
the steering angle limiting device (19, 219, 319, 419, 519, 619, 719) mechanically limits, especially based on the second steering signal, a movement, preferably a turning angle, of the mechanic transmission unit (11, 13, 111, 113), the second wheel (5, 105) and/or the steering device (123) to a range representative for the first steering angle or the steering angle limiting device (119) limits an electronic signal, especially the second steering signal, provided to the actuator to a range restricted to a value representative for the first steering angle, wherein preferably the steering angle limiting device (119) is comprised by the control device (115).

5. Passenger conveyance device according to claim 4, **characterized in that** the control device (115) receives the first steering signal, especially a first electronic signal representative for the first steering signal, wherein preferably further the control device (115) is connected to and/or comprises a speed limiting device and the control device (115) generates a second signal, especially transferred to the speed limiting device, limiting the speed of the passenger conveyance device (1, 101) to the second value, wherein especially the speed limiting device actuates a brake, reduces the power supply to the drive unit (9), limits the speed of the first wheel (3, 103), alters position of and/or alters a signal provided and/or generated by a speed actuator, especially an accelerator lever, an accelerator pedal, a gas pedal, a hand throttle, and/or a throttle.

6. Passenger conveyance device according to one of the preceding claims, **characterized by** at least one sensing device (17), wherein the first value is generated by the sensing device (17) and the first value is a rotational speed of the first wheel (3, 103), of the second wheel (5, 105), of the third wheel and/or of the drive unit (9), a power supply value, especially a voltage value, a current value and/or a power value, of the drive unit (9), a speed of the passenger conveyance device (1, 101) relative to a surface, especially calculated based on GPS signals, a position of the speed actuator and/or the signal provided by the speed actuator.

7. Passenger conveyance device according to one of the claims 4 to 6, **characterized in that** the control device (15, 115) generates the second steering signal and/or the second signal based on at least one lookup table and/or equation, wherein the relation between the first value and the first steering angle and/or the second steering angle and the second value is/are stored in the lookup table and/or is expressed in the equation, especially as a function of stability turning characteristics, a direction of travel or movement, an attitude and/or a longitudinal and/or transversal inclination of the passenger conveyance device (1, 101), and/or an occupant capability, like an ability of movement, a grade of paralysis, a muscular strength and/or age.

8. Passenger conveyance device according to one of the preceding claims, **characterized in that**
the second steering angle is greater than zero and/or smaller than the first steering angle, and/or the absolute value of the first steering angle is limited irrespective of a direction of the first steering angle, or the first steering angle is limited to different absolute values depending on the direction of the first steering angle,
the passenger conveyance device is in form of a scooter (1, 101), a mobility scooter, and/or a wheelchair, and
the steering angle limiting device (219, 319, 419, 519, 619, 719) comprises at least one first movable locking means (223, 323, 423, 523, 623, 723) and the mechanic transmission unit (11, 13, 111, 113) comprises at least one second locking means (225, 325, 425, 525, 625, 725), preferably drivingly connected to the mechanic transmission unit (13), the second wheel and/or the steering device, wherein a first contact surface (227a, 227b, 227c, 527) of the first locking means (223, 523) may be brought in contact with a second contact surface (229, 529a, 529b, 529c) of the second locking means (225, 525), especially at the first steering angle, wherein especially the first locking means (223) comprises a plurality of first contact surfaces (227a, 227b, 227c) and/or the second locking means (525) comprises a plurality of second contact surfaces (592a, 592b, 592c), wherein preferably the different first contact surfaces (227a, 227b, 227c) and/or second contact surfaces (529a, 529b, 592c) represent respective different first steering angles, wherein preferably at least two first contact surfaces (227a, 227b, 227c, 327a, 327b, 327c) and/or at least two second contact surfaces (529a, 529b, 529c, 729) are forming a step or are continuously merging into each other.

9. Passenger conveyance device according to claim 8, **characterized in that** the first locking means (223, 623, 723) is movable, preferably into a longitudinal direction, whereby changing the first contact surface (227a, 227b, 227c) contactable by the second locking means (425, 625, 725) or changing the second contact surface (529a, 529b, 529c) contactable by the first locking means (523) in case the mechanic transmission unit (11, 13) is turned such that the second wheel (5, 105) is turned to the first steering angle, wherein especially at least one actuating device (221, 621, 721) for moving the first locking means (223, 623, 723) is provided, wherein preferably the actuating device (221, 721) generates a longitudinal movement directly transmitted to the first locking means (223, 723) or the actuating device (621) generates a rotational movement being transferred into a preferably longitudinal, movement of the first locking means (623).

10. Passenger conveyance device according to claim 9, **characterized in that** the movement of the first locking means (223) is in a direction mainly perpendicular to a rotational axis of the second locking means (225) preferably in an radial direction of the rotational axis or **in that**
the movement of the first locking means (723) is in a direction mainly parallel to a rotational axis of the second locking means (725).

11. Passenger conveyance device according to one of the claims 8 to 10, **characterized in that** the first locking means (223) and/or the second locking means (225) a symmetrical with respect to at least one symmetry plane.

12. Method of controlling a steering angle of a passenger conveyance device (1, 101) according to one of the preceding claims, wherein the steering angle is measured as an angle of the second wheel (5, 105) relative to a steering position of the second wheel (5, 105) corresponding to a forward traveling direction of the passenger conveyance device (1, 101) and the steering angle is limited to a first steering angle based on a first value representative for a speed of the passenger conveyance device (1, 101), especially of the first wheel (3, 103), **characterized in that**
in case the steering angle exceeds a predefined second steering angle the speed of the passenger conveyance device (1, 101) is limited to a second value.

13. Method according to claim 12, **characterized in that**
the steering angle is changed, especially by an occupant, via at least one steering device (123), wherein preferably a first steering signal of the steering device (123) is mechanically transferred to the second wheel (5, 105), preferably via at least one mechanic transmission unit (11, 13, 111, 113),
the first steering signal is at least partly transferred to the second wheel (105) in form of an electronic signal, especially an analog and/or a digital electronic signal, preferably via at least one switch, at least one potentiometer an/or at least one actuator, wherein the actuator is preferably mechanically connected to the mechanic transmission unit (111, 113), and
the first value and/or the first steering angle is/are received by at least one, especially closed-loop, control device (15, 115) connected to at least one steering angle limiting device (19, 119) and the control device (15, 115) generates a second steering signal that is transmitted to the steering angle limiting device (19, 119), wherein especially a movement, especially a turning angle of the mechanic transmission unit (11, 13) and/or the steering device, is mechanically limited by the steering angle limiting device (19) to a range representative for the first steering angle or
an electronic signal, especially the second steering signal, provided to the actuator is limited, especially by the steering angle limiting device (119), to a range restricted to a value representative for the first steering angle.

14. Method according to claim 13, **characterized in that**
the first steering signal, especially a first electronic signal representative for the first steering signal, is/are received by the control device (15, 115), wherein preferably the control device (15, 115) generates a second signal, especially transferred to a speed limiting device, connected to the control device (15, 115), limiting the speed of the passenger conveyance device (1, 101) to the second value.

15. Method according to one of the claims 12 to 14, **characterized in that**
the second steering signal and/or the second signal is generated, preferably by the control device (15, 115), based on at least one lookup table, wherein the relation between the first value and the first steering angle, and/or the second steering angle and the second value is/are stored.

## Patentansprüche

1. Personenbeförderungsvorrichtung (1, 101), umfassend mindestens ein erstes Rad (3, 103) und mindestens ein zweites Rad (5, 105), wobei das erste Rad (3, 103) als Antriebsrad dient und das zweite Rad (5, 105) als lenkbares Rad dient, wobei ein Lenkwinkel des zweiten Rads (5, 105), der mit Bezug auf eine Lenkposition des zweiten Rads (5, 105), die einer Vorwärts- oder Rückwärtsfahrtrichtung der Personenbeförderungsvorrichtung entspricht, gemessen wird, basierend auf einem ersten Wert, der repräsentativ für eine Geschwindigkeit der Personenbeförderungsvorrichtung (1, 101), insbesondere des ersten Rads (3, 103), ist, auf einen ersten Lenkwinkel begrenzt ist,
**dadurch gekennzeichnet, dass**
für den Fall, dass der Lenkwinkel einen vordefinierten zweiten Lenkwinkel übersteigt, die Geschwindigkeit der Personenbeförderungsvorrichtung (1, 101) auf einen zweiten Wert begrenzt ist.

2. Personenbeförderungsvorrichtung nach Anspruch 1, **gekennzeichnet durch** eine Vielzahl von bevorzugt zwei ersten Rädern (3, 103), wobei insbesondere zwei erste Räder (3, 103) von einer gemeinsamen Antriebseinheit (9), bevorzugt über mindestens ein Getriebe (7), angetrieben werden oder zwei erste Räder (3, 103) von unabhängigen Antriebseinheiten angetrieben werden, und **dadurch** gekennzeichnet, dass mindestens ein erstes und mindestens ein zweites Rad von einem Rad gebildet werden, das insbesondere gleichzeitig als lenkbares Rad und als Antriebsrad dient, wobei die Personenbeförderungsvorrichtung bevorzugt mindestens ein drittes Rad umfasst, und dass das erste Rad (3, 103) ein Hinterrad ist und/oder das zweite Rad (5, 105) ein Vorderrad ist, mit Bezug auf eine Vorwärtsfahrtrichtung der Personenbeförderungsvorrichtung, wobei die Personenbeförderungsvorrichtung (1, 101) insbesondere zwei Hinterräder (3, 103) und ein Vorderrad (5, 105) umfasst.

3. Personenbeförderungsvorrichtung nach Anspruch 1 bis 2, **dadurch gekennzeichnet, dass**
der Lenkwinkel, insbesondere durch einen Insassen, über mindestens eine Lenkvorrichtung (123), wie etwa einen Lenkers, einen Steuerknüppel, ein Lenkrad (123), eine Lenkstange und/oder eine Steuerkugel, veränderbar ist, und/oder das zweite Rad (5, 105) und/oder die Lenkvorrichtung (123) an mindestens eine Lenkspindel (13, 113) angeschlossen ist bzw. sind, wobei bevorzugt mindestens eine mechanische Übertragungseinheit (11, 13, 111, 113) bereitgestellt wird, die über ein erstes Lenksignal der Lenkvorrichtung (123) mechanisch auf das zweite Rad (5, 105) übertragbar ist, wobei die mechanische Übertragungseinheit insbesondere mindestens ein Getriebe, einen Nocken, eine Achse, eine Welle, einen Steuerhebel, eine Gabelanordnung (11, 111), ein Kugelgelenk, die Lenkspindel (13, 113) und/oder ein mechanisches Verbindungsglied umfasst.

4. Personenbeförderungsvorrichtung nach einem der vorhergehenden Ansprüche, **dadurch gekennzeichnet, dass**
das erste Lenksignal mindestens teilweise auf das zweite Rad (5, 105) in Form eines elektronischen Signals, insbesondere eines analogen und/oder eines digitalen elektronischen Signals, bevorzugt über mindestens einen Schalter, mindestens ein Potentiometer und/oder mindestens ein Stellglied übertragbar ist, wobei das Stellglied bevorzugt mechanisch an die mechanische Übertragungseinheit (11, 13, 111, 113) angeschlossen ist, und dass
mindestens eine Steuervorrichtung (15, 115), insbesondere mit geschlossenem Regelkreis, an mindestens eine Lenkwinkelbegrenzungsvorrichtung (19, 119, 219, 319, 419, 519, 619, 719) angeschlossen ist, wobei die Steuervorrichtung (15, 115) den ersten Wert und/oder das erste Lenksignal empfängt und ein zweites Lenksignal generiert, das an die Lenkwinkelbegrenzungsvorrichtung (19, 219, 319, 419, 519, 619, 719) übertragen wird, wobei insbesondere
die Lenkwinkelbegrenzungsvorrichtung (19, 219, 319, 419, 519, 619, 719), insbesondere basierend auf dem zweiten Lenksignal, eine Bewegung, bevorzugt einen Drehwinkel, der mechanischen Übertragungseinheit (11, 13, 111, 113), des zweiten Rads (5, 105) und/oder der Lenkvorrichtung (123) mechanisch auf einen Bereich begrenzt, der repräsentativ für den ersten Lenkwinkel ist, oder die Lenkwinkelbegrenzungsvorrichtung (119) ein elektronisches Signal, insbesondere das zweite Lenksignal, das dem Stellglied bereitgestellt wird, auf einen Bereich, der auf einen Wert eingeschränkt ist, der repräsentativ für den ersten Lenkwinkel ist, begrenzt, wobei die Lenkwinkelbegrenzungsvorrichtung (119) bevorzugt von der Steuervorrichtung (115) umfasst ist.

5. Personenbeförderungsvorrichtung nach Anspruch 4, **dadurch gekennzeichnet, dass** die Steuervorrichtung (115) das erste Lenksignal, insbesondere ein erstes elektronisches Signal, welches repräsentativ für das erste Lenksignal ist, empfängt, wobei die Steuervorrichtung (115) bevorzugt ferner an eine Geschwindigkeitsbegrenzungsvorrichtung angeschlossen ist und/oder diese umfasst, und die Steuervorrichtung (115) ein zweites Signal generiert, das insbesondere an die Geschwindigkeitsbegrenzungsvorrichtung übertragen wird und die Geschwindigkeit der Personenbeförderungsvorrichtung (1, 101) auf den zweiten Wert begrenzt,
wobei die Geschwindigkeitsbegrenzungsvorrichtung insbesondere eine Bremse betätigt, die Stromversorgung für die Antriebseinheit (9) reduziert, die Geschwindigkeit des ersten Rads (3, 103) begrenzt, eine Position von und/oder ein Signal, das von einem Geschwindigkeitsstellglied, insbesondere einem Gashebel, einem Fahrpedal, einem Gaspedal, einem Handgashebel und/oder einer Drosselklappe, bereitgestellt und/oder generiert wird, ändert.

6. Personenbeförderungsvorrichtung nach einem der vorhergehenden Ansprüche, **gekennzeichnet durch**
mindestens eine Sensorvorrichtung (17), wobei der erste Wert von der Sensorvorrichtung (17) generiert wird und der erste Wert eine Drehgeschwindigkeit des ersten Rads (3, 103), des zweiten Rads (5, 105), des dritten Rads und/oder der Antriebseinheit (9), ein Stromversorgungswert, insbesondere ein Spannungswert, ein Stromwert und/oder ein Leistungswert, der Antriebseinheit (9), eine Geschwindigkeit der Personenbeförderungsvorrichtung (1, 101) mit Bezug auf eine Oberfläche, die insbesondere basierend auf GPS-Signalen berechnet wird, eine Position des Geschwindigkeitsstellglieds und/oder das Signal, das von dem Geschwindigkeitsstellglied bereitgestellt wird, ist.

7. Personenbeförderungsvorrichtung nach einem der Ansprüche 4 bis 6, **dadurch gekennzeichnet, dass**
die Steuervorrichtung (15, 115) das zweite Lenksignal und/oder das zweite Signal basierend auf mindestens einer Verweistabelle und/oder einer Gleichung generiert, wobei die Beziehung zwischen dem ersten Wert und dem ersten Lenkwinkel und/oder dem zweiten Lenkwinkel und dem zweiten Wert in der Verweistabelle gespeichert ist bzw. sind und/oder in der Gleichung insbesondere als Funktion von Stabilitätsdrehcharakteristiken, einer Fahrt- oder Bewegungsrichtung, einer Ausrichtung und/oder einer Längs- und/oder Querneigung der Personenbeförderungsvorrichtung (1, 101), und/oder einer Insassenkapazität, wie etwa einer Bewegungsfähigkeit, einem Lähmungsgrad, einer Muskelstärke und/oder dem Alter, ausgedrückt ist bzw. sind.

8. Personenbeförderungsvorrichtung nach einem der vorhergehenden Ansprüche, **dadurch gekennzeichnet, dass**
der zweite Lenkwinkel größer als null und/oder kleiner als der erste Lenkwinkel ist, und/oder der absolute Wert des ersten Lenkwinkels unabhängig von einer Richtung des ersten Lenkwinkels begrenzt ist, oder der erste Lenkwinkel auf verschiedene absolute Werte in Abhängigkeit von der Richtung des ersten Lenkwinkels begrenzt ist, die Personenbeförderungsvorrichtung in Form eines Motorrollers (1, 101), einer Mobilitätshilfe und/oder eines Rollstuhls vorliegt, und
die Lenkwinkelbegrenzungsvorrichtung (219, 319, 419, 519, 619, 719) mindestens ein erstes bewegbares Feststellmittel (223, 323, 423, 523, 623, 723) umfasst und die mechanische Übertragungseinheit (11, 13, 111, 113) mindestens ein zweites Feststellmittel (225, 325, 425, 525, 625, 725) umfasst, das bevorzugt antriebsmäßig an die mechanische Übertragungseinheit (13), das zweite Rad und/oder die Lenkvorrichtung angeschlossen ist, wobei eine erste Kontaktfläche (227a, 227b, 227c, 527) des ersten Feststellmittels (223, 523) in Kontakt mit einer zweiten Kontaktfläche (229, 529a, 529b, 529c) des zweiten Feststellmittels (225, 525) gebracht werden kann, insbesondere in dem ersten Lenkwinkel, wobei insbesondere das erste Feststellmittel (223) eine Vielzahl von ersten Kontaktflächen (227a, 227b, 227c) umfasst und/oder das zweite Feststellmittel (525) eine Vielzahl von zweiten Kontaktflächen (592a, 592b, 592c) umfasst, wobei bevorzugt die verschiedenen ersten Kontaktflächen (227a, 227b, 227c) und/oder die zweiten Kontaktflächen (529a, 529b, 592c) jeweilige unterschiedliche erste Lenkwinkel darstellen, wobei bevorzugt mindestens zwei erste Kontaktflächen (227a, 227b, 227c, 327a, 327b, 327c) und/oder mindestens zwei zweite Kontaktflächen (529a, 529b, 529c, 729) eine Stufe bilden oder fließend ineinander übergehen.

9. Personenbeförderungsvorrichtung nach Anspruch 8, **dadurch gekennzeichnet, dass** das erste Feststellmittel (223, 623, 723) bevorzugt in einer Längsrichtung bewegbar ist, wodurch die erste Kontaktfläche (227a, 227b, 227c), die durch das zweite Feststellmittel (425, 625, 725) berührt werden kann, geändert wird, oder die zweite Kontaktfläche (529a, 529b, 529c), die von dem ersten Feststellmittel (523) berührt werden kann, geändert wird, falls die mechanische Übertragungseinheit (11, 13) derart gedreht ist, dass das zweite Rad (5, 105) in dem ersten Lenkwinkel gedreht ist, wobei insbesondere mindestens eine Betätigungsvorrichtung (221, 621, 721) zum Bewegen des ersten Feststellmittels (223, 623, 723) bereitgestellt wird, wobei die Betätigungsvorrichtung (221, 721) bevorzugt eine Längsbewegung generiert, die direkt an das erste Feststellmittel (223, 723) übertragen wird, oder die Betätigungsvorrichtung (621) eine Drehbewegung generiert, die in eine bevorzugt längsgerichtete Bewegung des ersten Feststellmittels (623) übertragen wird.

10. Personenbeförderungsvorrichtung nach Anspruch 9, **dadurch gekennzeichnet, dass** die Bewegung des ersten Feststellmittels (223) in eine Richtung geht, die zu einer Drehachse des zweiten Feststellmittels (225) bevorzugt in einer radialen Richtung der Drehachse im wesentlichen rechtwinklig ist, oder dass
die Bewegung des ersten Feststellmittels (723) in eine Richtung geht, die zu einer Drehachse des zweiten Feststellmittels (725) im wesentlichen parallel ist.

11. Personenbeförderungsvorrichtung nach einem der Ansprüche 8 bis 10, **dadurch gekennzeichnet, dass**
das erste Feststellmittel (223) und/oder das zweite Feststellmittel (225) im Verhältnis zu mindestens einer Symmetrieebene symmetrisch ist bzw. sind.

12. Verfahren zum Steuern eines Lenkwinkels einer Personenbeförderungsvorrichtung (1, 101) nach einem der vorhergehenden Ansprüche, wobei der Lenkwinkel als Winkel des zweiten Rads (5, 105) mit Bezug auf eine Lenkposition des zweiten Rads (5, 105), die einer Vorwärtsfahrtrichtung der Personenbeförderungsvorrichtung (1, 101) entspricht, gemessen wird, und der Lenkwinkel basierend auf einem ersten Wert, der repräsentativ für eine Geschwindigkeit der Personenbeförderungsvorrichtung (1, 101), insbesondere des ersten Rads (3, 103) ist, auf einen ersten Lenkwinkel begrenzt wird, **dadurch gekennzeichnet, dass**
für den Fall, dass der Lenkwinkel einen vordefinierten zweiten Lenkwinkel übersteigt, die Geschwindigkeit der Personenbeförderungsvorrichtung (1, 101) auf einen zweiten Wert begrenzt wird.

13. Verfahren nach Anspruch 12, **dadurch gekennzeichnet, dass** der Lenkwinkel, insbesondere von einem Insassen, anhand mindestens einer Lenkvorrichtung (123) geändert wird, wobei bevorzugt ein erstes Lenksignal der Lenkvorrichtung (123) bevorzugt über mindestens eine mechanische Übertragungseinheit (11, 13, 111, 113) mechanisch auf das zweite Rad (5, 105) übertragen wird,
das erste Lenksignal mindestens teilweise auf das zweite Rad (105) in Form eines elektronischen Signals, insbesondere eines analogen und/oder eines digitalen elektronischen Signals, bevorzugt über mindestens einen Schalter, mindestens ein Potentiometer und/oder mindestens ein Stellglied, wobei das Stellglied bevorzugt mechanisch an die mechanische Übertragungseinheit (111, 113) angeschlossen ist, übertragen wird, und
der erste Wert und/oder der erste Lenkwinkel von mindestens einer Steuervorrichtung (15, 115), insbesondere mit geschlossenem Regelkreis, die an mindestens eine Lenkwinkelbegrenzungsvorrichtung (19, 119) angeschlossen ist, empfangen wird bzw. werden, und die Steuervorrichtung (15, 115) ein zweites Lenksignal generiert, das an die Lenkwinkelbegrenzungsvorrichtung (19, 119) übertragen wird, wobei insbesondere eine Bewegung, insbesondere ein Drehwinkel der mechanischen Übertragungseinheit (11, 13) und/oder der Lenkvorrichtung, von der Lenkwinkelbegrenzungsvorrichtung (19) mechanisch auf einen Bereich, der repräsentativ für den ersten Lenkwinkel ist, begrenzt wird, oder
ein elektronisches Signal, insbesondere das zweite Lenksignal, das dem Stellglied bereitgestellt wird, insbesondere durch die Lenkwinkelbegrenzungsvorrichtung (119) auf einen Bereich, der auf einen Wert eingeschränkt ist, der repräsentativ für den ersten Lenkwinkel ist, begrenzt wird.

14. Verfahren nach Anspruch 13, **dadurch gekennzeichnet, dass** das erste Lenksignal, insbesondere ein erstes elektronisches Signal, welches repräsentativ für das erste Lenksignal ist, von der Steuervorrichtung (15, 115) empfangen wird, wobei die Steuervorrichtung (15, 115) bevorzugt ein zweites Signal generiert, das insbesondere an eine Geschwindigkeitsbegrenzungsvorrichtung übertragen wird, die an die Steuervorrichtung (15, 115) angeschlossen ist und die Geschwindigkeit der Personenbeförderungsvorrichtung (1, 101) auf den zweiten Wert begrenzt.

15. Verfahren nach einem der Ansprüche 12 bis 14, **dadurch gekennzeichnet, dass** das zweite Lenksignal und/oder das zweite Signal bevorzugt von der Steuervorrichtung (15, 115) basierend auf mindestens einer Verweistabelle generiert wird bzw. werden, wobei die Beziehung zwischen dem ersten Wert und dem ersten Lenkwinkel und/oder dem zweiten Lenkwinkel und dem zweiten Wert gespeichert wird bzw. werden.

## Revendications

1. Dispositif de transport de passager (1, 101) comprenant au moins une première (3, 103) et au moins une deuxième roue (5, 105), la première roue (3, 103) agissant comme une roue menante et la deuxième roue (5, 105) agissant comme une roue directrice, un angle de braquage de la deuxième roue (5, 105) mesuré par rapport à une position de braquage de la deuxième roue (5, 105) correspondant à une direction de déplacement vers l'avant ou vers l'arrière du dispositif de transport de passager est limité à un premier angle de braquage sur la base d'une première valeur représentative d'une vitesse du dispositif de transport de passager (1, 101), en particulier de la première roue (3, 103),
**caractérisé en ce que**
dans le cas où l'angle de braquage dépasse un second angle de braquage prédéfini la vitesse du dispositif de transport de passager (1, 101) est limitée à une seconde valeur.

2. Dispositif de transport de passager selon la revendication 1, **caractérisé par** plusieurs, de préférence deux, premières roues (3, 103), dans lequel en particulier deux premières roues (3, 103) sont entraînées par une unité d'entraînement commune (9), de préférence par l'intermédiaire d'au moins une boîte de vitesses (7), ou deux premières roues (3, 103) sont entraînées par des unités d'entraînement indépendantes, et **caractérisé en ce qu'**au moins une première et au moins une deuxième roue sont formées par une roue, agissant en particulier simultanément comme roue directrice et roue menante, de préférence le dispositif de transport de passager comprenant au moins une troisième roue, et **en ce que** la première roue (3, 103) est une roue arrière et/ou la deuxième roue (5, 105) est une roue avant par rapport à une direction de déplacement vers l'avant du dispositif de transport de passager, le dispositif de transport de passager (1, 101) comprenant spécifiquement deux roues arrière (3, 103) et une roue avant (5, 105).

3. Dispositif de transport de passager selon les revendications 1 ou 2, **caractérisé en ce que** l'angle de braquage peut être changé, en particulier par un occupant, par l'intermédiaire d'au moins un dispositif de braquage (123), tel qu'un guidon, une manette, une roue directrice (123), une barre de direction et/ou une boule de suivi, et/ou la deuxième roue (5, 105) et/ou le dispositif de braquage (123) est/sont reliés à au moins une broche de braquage (13, 113), dans lequel de préférence au moins une unité de transmission mécanique (11, 13, 111, 113) est fournie, qui, par l'intermédiaire d'un premier signal de braquage du dispositif de braquage (123), peut être transférée mécaniquement à la deuxième roue (5, 105), dans lequel l'unité de transmission mécanique comprend en particulier au moins une boîte de vitesses, une came, un essieu, un arbre, un timon, un agencement de fourchette (11, 111), une rotule, la broche de braquage (13,113) et/ou une liaison mécanique.

4. Dispositif de transport de passager selon l'une quelconque des revendications précédentes, **caractérisé en ce que**
le premier signal de braquage peut au moins partiellement être transféré à la deuxième roue (5, 105) sous la forme d'un signal électronique, en particulier un signal électronique analogique et/ou numérique, de préférence par l'intermédiaire d'au moins un commutateur, au moins un potentiomètre et/ou au moins un actionneur, dans lequel l'actionneur est de préférence relié mécaniquement à l'unité de transmission mécanique (11, 13, 111, 113), et **en ce que**
au moins un dispositif de commande (15, 115), en particulier une boucle fermée, est relié à au moins un dispositif de limitation d'angle de braquage (19, 119, 219, 319, 419, 519, 619, 719), dans lequel le dispositif de commande (15, 115) reçoit la première valeur et/ou le premier signal de braquage et produit un second signal de braquage qui est transmis au dispositif de limitation d'angle de braquage (19, 219, 319, 419, 519, 619, 719), dans lequel en particulier
le dispositif de limitation d'angle de braquage (19, 219, 319, 419, 519, 619, 719) limite mécaniquement, en particulier sur la base du second signal de braquage, un mouvement, de préférence un angle de rotation, de l'unité de transmission mécanique (11, 13, 100, 113), de la seconde roue (5, 105) et/ou du dispositif de braquage (123) à une plage représentative du premier angle de braquage ou le dispositif de limitation d'angle de braquage (119) limite un signal électronique, en particulier le second signal de braquage, fourni à l'actionneur à une plage limitée à une valeur représentative du premier angle de braquage, dans lequel de préférence le dispositif de limitation d'angle de braquage (119) est constitué par le dispositif de commande (115).

5. Dispositif de transport de passager selon la revendication 4, **caractérisé en ce que** le dispositif de commande (115) reçoit le premier signal de braquage, en particulier un premier signal électronique représentatif du premier signal de braquage, dans lequel de préférence de plus le dispositif de commande (115) est relié à et/ou comprend un dispositif de limitation de vitesse et le dispositif de commande (115) produit un second signal, en particulier transféré au dispositif de limitation de vitesse, limitant la vitesse du dispositif de transport de passager (1, 101) à la seconde valeur, dans lequel en particulier le dispositif de limitation de vitesse actionne un frein, réduit l'alimentation en courant vers l'unité d'entraînement (9), limite la vitesse de la première roue (3, 103) modifie la position et/ou modifie un signal fourni et/ou produit par un actionneur de vitesse, en particulier d'un levier d'accélérateur, d'une pédale d'accélérateur, d'une pédale des gaz, d'un accélérateur à main, et/ou d'un papillon des gaz.

6. Dispositif de transport de passager selon l'une quelconque des revendications précédentes, **caractérisé en ce qu'**il comprend au moins un dispositif de détection (17), dans lequel la première valeur est produite par le dispositif de détection (17) et la première valeur est une vitesse de rotation de la première roue (3, 103), de la deuxième roue (5, 105), de la troisième roue et/ou de l'unité d'entraînement (9), une valeur d'alimentation en courant, en particulier une valeur de tension, une valeur d'intensité et/ou une valeur de puissance, de l'unité d'entraînement (9), une vitesse du dispositif de transport de passager (1, 101) par rapport à une surface, calculée en particulier sur la base de signaux GPS, une position de l'actionneur de vitesse et/ou un signal fourni par l'actionneur de vitesse.

7. Dispositif de transport de passager selon l'une quelconque des revendications 4 à 6, **caractérisé en ce que** le dispositif de commande (15, 115) produit le second signal de braquage et/ou le second signal sur la base d'au moins une table de consultation et/ou une équation, dans lequel la relation entre la première valeur et le premier angle de braquage et/ou le second angle de braquage et la seconde valeur est/sont mémorisées dans la table de consultation et/ou exprimées dans l'équation, en particulier sous la forme d'une fonction de caractéristiques de rotation avec stabilité, une direction de déplacement ou de mouvement, une attitude et/ou une inclinaison longitudinale et/ou transversale du dispositif de transport de passager (1, 101), et/ou une capacité de l'occupant, telle qu'une capacité de déplacement, une étendue de paralysie, une force musculaire et/ou son âge.

8. Dispositif de transport de passager selon l'une quelconque des revendications précédentes, **caractérisé en ce que**
le second angle de braquage est plus grand que zéro et/ou plus petit que le premier angle de braquage, et/ou la valeur absolue du premier angle de braquage est limitée indépendamment de la direction du premier angle de braquage, ou le premier angle de braquage est limité à des valeurs absolues différentes en fonction de la direction du premier angle de braquage,
le dispositif de transport de passager a la forme d'un scooter (1, 101), un scooter pour personne à mobilité réduite, et/ou un fauteuil roulant, et
le dispositif de limitation d'angle de braquage (219, 319, 419, 519, 619, 719) comprend au moins des premiers moyens de blocage mobiles (223, 323, 423, 523, 623, 723) et l'unité de transmission mécanique (11, 13, 111, 113) comprend au moins des seconds moyens de blocage (225, 325, 425, 525, 625, 725), reliés de préférence de manière menante à l'unité de transmission mécanique (13), à la seconde roue et/ou au dispositif de braquage, dans lequel une première surface de contact (227a, 227b, 227c, 527) des premiers moyens de blocage (223, 523) peut être amenée en contact avec une seconde surface de contact (229, 529a, 529b, 529c) des seconds moyens de blocage (225, 525), en particulier au niveau du premier angle de braquage, dans lequel en particulier les premiers moyens de blocage (223) comprennent plusieurs premières surfaces de contact (227a, 227b, 227c) et/ou les seconds moyens de blocage (525) comprennent plusieurs secondes surfaces de contact (592a, 592b, 592c), dans lequel de préférence les différentes premières surfaces de contact (227a, 227b, 227c) et/ou secondes surfaces de contact (529a, 529b, 592c) représentent des premiers angles de braquage différents respectifs, dans lequel de préférence au moins deux premières surfaces de contact (227a, 227b, 227c, 327a, 327b, 327c) et/ou au moins deux secondes surfaces de contact (529a, 529b, 529c, 729) forment un gradin ou fusionnent en continu l'une avec l'autre.

9. Dispositif de transport de passager selon la revendication 8, **caractérisé en ce que** les premiers moyens de blocage (223, 623, 723) sont mobiles, de préférence dans une direction longitudinale, de telle sorte que changer la première surface de contact (227a, 227b, 227c) pouvant être en contact avec les seconds moyens de blocage (425, 625, 725) ou changer la seconde surface de contact (529a, 529b, 529c) pouvant être en contact avec les premiers moyens de blocage (523) dans le cas où l'unité de transmission mécanique (11, 13) est mise en rotation de telle sorte que la deuxième roue (5, 105) est tournée vers le premier angle de braquage, dans lequel en particulier au moins un dispositif d'actionnement (221, 621, 721) destiné à déplacer les premiers moyens de blocage (223, 623, 723) est fourni, dans lequel de préférence le dispositif d'actionnement (221, 721) produit un mouvement longitudinal transmis directement aux premiers moyens de blocage (223, 723) ou le dispositif d'actionnement (621) produit un mouvement de rotation transféré en un mouvement de préférence longitudinal des premiers moyens de blocage (623).

10. Dispositif de transport de passager selon la revendication 9, **caractérisé en ce que** le mouvement des premiers moyens de blocage (223) s'effectue dans une direction principalement perpendiculaire à un axe de rotation des seconds moyens de blocage (225) de préférence dans une direction radiale de l'axe de rotation ou **en ce que** le mouvement des premiers moyens de blocage (723) s'effectue dans une direction principalement parallèle à un axe de rotation des seconds moyens de blocage (725).

11. Dispositif de transport de passager selon l'une quelconque des revendications 8 à 10, **caractérisé en ce que** les premiers moyens de blocage (223) et/ou les seconds moyens de blocage (225) sont symétriques par rapport à au moins un plan de symétrie.

12. Procédé de commande d'un angle de braquage d'un dispositif de transport de passager (1, 101) selon l'une quelconque des revendications précédentes, dans lequel l'angle de braquage est mesuré sous la forme d'un angle de la deuxième roue (5, 105) relatif à une position de braquage de la deuxième roue (5, 105) correspondant à une direction de déplacement vers l'avant du dispositif de transport de passager (1, 101) et l'angle de braquage est limité à un premier angle de braquage sur la base d'une première valeur représentative d'une vitesse du dispositif de transport de passager (1, 101), en particulier de la première roue (3,103), **caractérisé en ce que** dans le cas où l'angle de braquage dépasse un second angle de braquage prédéfini, la vitesse du dispositif de transport de passager (1, 101) est limitée à une seconde valeur.

13. Procédé selon la revendication 12, **caractérisé en ce que** l'angle de braquage est changé, en particulier par un occupant, par l'intermédiaire d'au moins un dispositif de braquage (123), dans lequel de préférence un premier signal de braquage du dispositif de braquage (123) est transféré mécaniquement à la deuxième roue (5, 105), de préférence par l'intermédiaire d'au moins une unité de transmission mécanique (11, 13, 111, 113),
le premier signal de braquage est au moins partiellement transféré à la deuxième roue (105) sous forme d'un signal électronique, en particulier un signal électronique analogique et/ou numérique, de préférence par l'intermédiaire d'au moins un commutateur, au moins un potentiomètre et/ou au moins un actionneur, dans lequel l'actionneur est de préférence relié mécaniquement à l'unité de transmission mécanique (111, 113), et
la première valeur et/ou le premier angle de braquage est/sont reçus par au moins un dispositif de commande (15, 115), en particulier une boucle fermée, connecté à au moins un dispositif de limitation d'angle de braquage (19, 119) et le dispositif de commande (15, 115) produit un second signal de braquage qui est transmis au dispositif de limitation d'angle de braquage (19, 119), dans lequel en particulier un mouvement, en particulier un angle de rotation, de l'unité de transmission mécanique (11, 13) et/ou le dispositif de braquage, est limité mécaniquement par le dispositif de limitation d'angle de braquage (19) à une plage représentative du premier angle de braquage ou
un signal électronique, en particulier le second signal de braquage, fourni à l'actionneur est limité, en particulier par le dispositif de limitation d'angle de braquage (119), à une plage limitée à une valeur représentative du premier angle de braquage.

14. Procédé selon la revendication 13, **caractérisé en ce que** le premier signal de braquage, en particulier un premier signal électronique représentatif du premier signal de braquage, est/sont reçus par le dispositif de commande (15, 115), dans lequel de préférence le dispositif de commande (15, 115) produit un second signal, transféré en particulier au dispositif de limitation de vitesse, relié au dispositif de commande (15, 115), limitant la vitesse du dispositif de transport de passager (1, 101) à la seconde valeur.

15. Procédé selon l'une quelconque des revendications 12 à 14, **caractérisé en ce que** le second signal de braquage et/ou le second signal est produit, de préférence par le dispositif de commande (15, 115), sur la base d'au moins une table de consultation, dans lequel la relation entre la première valeur et le premier angle de braquage, et/ou le second angle de braquage et la seconde valeur est/sont mémorisées.
